(19) **Europäisches Patentamt / European Patent Office / Office européen des brevets**

(11) **EP 2 148 515 A1**

(12) **EUROPEAN PATENT APPLICATION**
published in accordance with Art. 153(4) EPC

(43) Date of publication:
**27.01.2010 Bulletin 2010/04**

(51) Int Cl.:
**H04N 9/64** (2006.01)  **G09G 3/20** (2006.01)
**G09G 5/00** (2006.01)  **G09G 5/02** (2006.01)
**G09G 5/36** (2006.01)

(21) Application number: **08740839.9**

(22) Date of filing: **24.04.2008**

(86) International application number:
**PCT/JP2008/057990**

(87) International publication number:
**WO 2008/136367 (13.11.2008 Gazette 2008/46)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **26.04.2007 JP 2007116290**

(71) Applicant: **Sharp Kabushiki Kaisha
Osaka-shi, Osaka 545-8522 (JP)**

(72) Inventor: **KATAKAME, Hirokazu
Osaka-shi
Osaka 545-8522 (JP)**

(74) Representative: **Müller - Hoffmann & Partner
Patentanwälte
Innere Wiener Strasse 17
81667 München (DE)**

(54) **IMAGE PROCESSOR, AND IMAGE PROCESSING METHOD**

(57)  When correcting (converting) a video signal from an imaging system and a recording system to be faithfully reproduced on a display device, this image processor corrects (converts) the video signal to a video equal to that reproduced by an ideal display device intended by an imaging person. Therefore, the image processor is capable of reproducing and displaying the video which is faithful to the color intended by the imaging person and which contains no distortion in luminance to a viewer who is an end user. The image processor has a means which is connected directly or indirectly with the display device to transmit video information, a means which obtains or selecting reproduction property information of the connected display device, a means which converts the video information to reproduce a video in a faithful color on the display device with the use of the obtained reproduction property information, and a means which controls a transmission part to output the converted video information. Moreover, the image processor has a means for performing similar processing for reproducing the video containing no distortion in luminance.

Fig3A

**Description**

**Field of the Invention**

The present invention relates to an image processing apparatus and an image processing method. The present invention relates specifically to an image processing apparatus and an image processing method, in which image information is converted to chromaticity coordinates or gamma characteristic corresponding to a display apparatus connected directly or indirectly to the image processing apparatus, and is transmitted to the display apparatus.

**Background Art**

An AV (Audio-Visual) device generally has an imaging system (1), a recording system (2), and a display system (3), and performs color reproduction corresponding to image signals having imaging characteristic corresponding to a plurality of different color reproduction areas, thereby displaying on a display screen of a receiver. In this case, as to the recording system, thanks to digital processing technology, nearly accurate images corresponding to the image signal outputted from the imaging system can be recorded. Meanwhile, as for the display system, each display apparatus has a different characteristic of color reproducibility, so that it is necessary to carry out conversion in order to reproduce the accurate image corresponding to the image signal outputted from the imaging system or the recording system on the display apparatus (e.g., the non-patent reference 1 relating to the above-mentioned general technology). As for the conversion technology for the image signal corresponding to the characteristic of color reproducibility of the display apparatus, for example, a color display apparatus, in which the display apparatus appropriately measures the inputted image signal, and carries out correction, thereby carrying out display corresponding to the color reproducibility area of the display apparatus, has been known (see the patent reference 1). According to the conversion method utilizing the display apparatus, when RGB signal is inputted to the display apparatus, the display apparatus carries out conversion from a specific camera signal to a linear RGB signal (linear conversion) by executing matrix operation for color conversion (a matrix operation for correcting color difference of RGB phosphor and W between those of input and those of output) utilizing an inverse correction circuit, and moreover, the operated RGBW signal is corrected according to the characteristic of chromaticity coordinate value or gamma characteristic of a display device such as a CRT (Cathode Ray Tube), a liquid-crystal display, or a plasma display by utilizing the correction circuit, and displayed. Thus, in the conventional technology, generally, two color conversions, (1) conversion from RGB signal indicating color space (a space where color is expressed by a combination of numerical values) imaged by the imaging apparatus to a standard color space (a color space of color. The color is determined separately from the characteristic of the imaging apparatus or the display apparatus, and can be reproduced by any device, and the range of the color space is generally narrower than the color space determined based on the characteristic of the imaging apparatus etc.), and (2) conversion for displaying the RGB signal indicating the standard color space on the display apparatus, are carried out.

Non-patent Reference 1: 'Display No Kiso' (Iwao Oishi et al. Kyoritsu Shuppan Co.,Ltd. 2001)
Patent Reference 1: Japanese Unexamined Patent Application Publication No. H4-291591

**Disclosure of the Invention**

**Problems that the Invention Tries to Solve**

However, in the conventional method, when the conversion from the wide color space of the imaging apparatus to the generally narrow color space of the display is carried out, a color not belonging to the color space of the display is replaced by another similar color, and the conversion is carried out. In this case, a color area of the color converted by the display apparatus is converted differently, so that the color (including white balance) intended by the person who took an image is not accurately reproduced. In addition, even if a system, in which RAW data is transmitted from the camera and is corrected by the display apparatus, is installed, for example, the while balance and iris of the camera changes depending on imaging condition, and various detailed setting conditions constantly vary depending on luminance, so that there is a possibility that the characteristic of the imaging side indicated by the image signal transmitted from the imaging side changes during the transmission, and it is difficult to install the processing system on the TV side. However, in the conventional system of the patent reference 1, a parameter for the correction is preliminarily installed in the display apparatus itself, so that it is virtually impossible to carry out the correction for accurate reproduction of the image corresponding to such changes of the characteristic by the display apparatus.

In addition, the color not belonging to the color space of the display is replaced by another similar color, and the conversion is carried out, so that the color area (including white balance) of the color converted by the display apparatus is converted differently not only in the case of reproducing an image imaged by the imaging apparatus but also in the case of reproducing computer graphics generated by a computer, so that there is a problem that the color intended by the person, who generated the image, cannot be accurately reproduced.

Here at, in the present invention, by utilizing the chromaticity coordinate value and the gamma characteristic of the display, which have already been known, the conversion of the image information is carried out by the transmitter side, thereby enabling reproduction of accurate color.

Therefore, the problem that the present invention tries to solve is to provide the image processing apparatus. In the image processing apparatus, when carrying out the correction (conversion) of the image signal from the imaging (image generating) system and recording system in order to accurately reproduce the image signal, the conversion is carried out as if an ideal display apparatus for the person who takes an image (a person who generates an image) carries out the correction (conversion). (The ideal display apparatus has a gamma characteristic and chromaticity coordinates chromaticity coordinate values, the same as those included in the image information imaged by the imaging apparatus (image generating apparatus). The ideal display apparatus can accurately reproduce the color of an original image only by displaying the image without any conversion of the chromaticity coordinate values included in the image information imaged by the imaging apparatus. The same applies to the following description.) This makes it possible to provide the image processing apparatus, which can reproduce and display an image having accurate color intended by the person who took an image (a person who generates an image) and has no luminance distortion for a viewer as an end user.

**Means for Solving the Problems**

In order to solve the above deficiencies, in a first aspect of the present invention, we provide an image processing apparatus, comprising, a transmitter for directly or indirectly connecting to a display apparatus, and transmitting image information, an acquirer for reproducibility characteristic acquiring or selecting reproducibility characteristic information of the connected display apparatus, a converter for converting image information utilizing the reproducibility characteristic information acquired by the acquirer for reproducibility characteristic, such that accurate image color is reproduced by the display apparatus, and a controller for causing the transmitter to transmit the converted image information.

In a second aspect of the present invention, we provide an image processing apparatus, comprising, a transmitter for directly or indirectly connecting to a plurality of display apparatuses, and transmitting image information, an acquirer for reproducibility characteristic acquiring or selecting reproducibility characteristic information of the connected plurality of display apparatuses, a converter for converting image information utilizing the respective reproducibility characteristic information acquired by the acquirer for reproducibility characteristic, such that an image having color standardized between the plurality of display apparatuses is reproduced, and a controller for causing the transmitter to transmit the converted image information.

In a third aspect of the present invention, we provide an image processing apparatus, comprising, a transmitter for directly or indirectly connecting to a display apparatus, and transmitting image information, an acquirer for reproducibility characteristic acquiring or selecting reproducibility characteristic information of the connected display apparatus, a converter for converting image information utilizing the reproducibility characteristic information acquired by the acquirer for reproducibility characteristic, such that an image having no luminance distortion is reproduced by the display apparatus, and a controller for causing the transmitter to transmit the converted image information.

In a fourth aspect of the present invention, we provide an image processing apparatus, comprising, a storage for chromaticity coordinate storing chromaticity coordinate value data, which indicates a chromaticity coordinates of a display apparatus, a transmitter for directly or indirectly connecting to a display apparatus, and transmitting image information, a storage for storing image information whose chromaticity coordinate value has already been known, a converter for chromaticity coordinates converting the image information stored by the storage for image information to the chromaticity coordinates corresponding to the display apparatus by selecting and utilizing data corresponding to the display apparatus connected directly or indirectly to the transmitter from the chromaticity coordinate value data of the display apparatus stored by the storage, and a controller for carrying out control for causing the transmitter to transmit the converted image information.

In a fifth aspect of the present invention, we provide an image processing apparatus based on the fourth aspect, wherein the transmitter comprises a plurality of transmission means for directly or indirectly connecting to a display apparatus, and transmitting image information, the converter for chromaticity coordinates comprises, a plurality of conversion means for chromaticity coordinates carrying out the chromaticity coordinate conversion corresponding to the plurality of display apparatuses, and the controller comprises a simultaneous control means for chromaticity coordinates carrying out control for causing the transmission means to simultaneously transmit the image information converted by the plurality of conversion means for chromaticity coordinates to the corresponding display apparatuses.

In a sixth aspect of the present invention, we provide an image processing apparatus, comprising, a gamma data storage for storing gamma data, which indicates a gamma characteristic of a display apparatus, a transmitter for directly or indirectly connecting to a display apparatus, and transmitting image information, a storage for image information storing image information, whose gamma characteristic has already been known, a gamma converter converting the image information stored by the storage for image information to the gamma characteristic corresponding to the display apparatus by selecting and utilizing data corresponding to the display apparatus connected directly or indirectly to the transmitter from the gamma data of the display apparatus stored by the gamma data storage, and a gamma controller for causing the transmitter to transmit the converted image information.

In a seventh aspect of the present invention, we provide an image processing apparatus based on the sixth aspect, wherein the transmitter comprises a plurality of transmission means for directly or indirectly connecting to a display apparatus, and transmitting image information, the gamma converter comprises a plurality of gamma conversion means for carrying out the gamma characteristic conversion corresponding to the plurality of display apparatuses, and the gamma controller comprises a simultaneous gamma control means for carrying out control for causing the transmission means to simultaneously transmit the image information converted by the plurality of gamma conversion means to the corresponding display apparatuses.

In an eighth aspect of the present invention, we provide a method of image processing, comprising the steps of storing chromaticity coordinate value data indicating a chromaticity coordinates of a display apparatus, first transmission to directly or indirectly connect a display apparatus, selecting data corresponding to the display apparatus connected by the step of first transmission from the chromaticity coordinate value data of the display apparatus stored by the step of storing chromaticity coordinate value data, converting the image information whose chromaticity coordinates has already been known to the chromaticity coordinates corresponding to the display apparatus connected by the step of first transmission by utilizing the chromaticity coordinate value data selected by the step of selecting, controlling transmission of the image information converted by the step of converting, and second transmission to transmit the image information in accordance with the control by the step of controlling.

In a ninth aspect of the present invention, we provide a method of image processing based on the eighth aspect, wherein the transmission by the step of second transmission is to directly or indirectly connect a plurality of display apparatuses, and to transmit the image information thereto, the conversion by the step of converting is to carry out the chromaticity coordinate conversion corresponding to the plurality of display apparatuses, and the control by the step of controlling is to carry out control, such that the image information corresponding to the plurality of display apparatuses converted by the step of converting is simultaneously transmitted to the corresponding display apparatuses.

In a tenth aspect of the present invention, we provide a method of image processing, comprising the steps of storing gamma data, which indicates gamma characteristics of a display apparatus, first transmission to directly or indirectly connect a display apparatus, selecting data corresponding to the display apparatus connected by the step of first transmission from the gamma data of the display apparatus stored by the step of storing gamma data, converting the image information, whose gamma characteristics have already been known, to the gamma characteristics corresponding to the display apparatus connected by the step of first transmission by utilizing the gamma data selected by the step of selecting, controlling transmission of the image information converted by the step of converting, and second transmission to transmit the image information in accordance with the control by the step of controlling.

In an eleventh aspect of the present invention, we provide a method of image processing based on the tenth aspect, wherein the transmission by the step of second transmission is to directly or indirectly connect a plurality of display apparatuses, and to transmit the image information thereto, the conversion by the step of converting is to carry out the gamma characteristic conversion corresponding to the plurality of display apparatuses, and the control by the step of controlling is to carry out control, such that the image information corresponding to the plurality of display apparatuses converted by the step of converting is simultaneously transmitted to the corresponding display apparatuses.

In a twelfth aspect of the present invention, we provide an image processing program for causing a computer to operate a transmitter for directly or indirectly connecting to a display apparatus, and transmitting image information, an acquirer for reproducibility characteristic acquiring or selecting reproducibility characteristic information of the connected display apparatus, a converter for converting image information utilizing the reproducibility characteristic information acquired by the acquirer for reproducibility characteristic, such that accurate image color is reproduced by the display apparatus, and a controller for causing the transmitter to transmit the converted image information.

In a thirteenth aspect of the present invention, we provide an image processing program for causing a computer to operate, a transmitter for directly or indirectly connecting to a plurality of display apparatuses, and transmitting the image information, a converter for converting image information utilizing the respective reproducibility characteristic information of the connected plurality of display apparatuses, such that an image having color standardized between the plurality of display apparatuses is reproduced, and a controller for causing the transmitter to transmit the converted image information.

In a fourteenth aspect of the present invention, we provide an image processing program for causing a computer to operate a transmitter for directly or indirectly connecting to a display apparatus, and transmitting image information, an acquirer for reproducibility characteristic acquiring or selecting reproducibility characteristic information of the connected display apparatus, a converter for converting image information utilizing the reproducibility characteristic information acquired by the acquirer for reproducibility characteristic, such that an image having no luminance distortion is reproduced by the display apparatus, and a controller for causing the transmitter to transmit the converted image information.

**Effects of the Invention**

According to the present invention, when the correction (conversion) of the image signal from the imaging (image generating) system and recording system in order to accurately reproduce the image signal, the conversion is carried out as if an ideal display apparatus for the person who took an image (a person who generates an image) carries out the correction (conversion). This makes it possible to provide the image processing apparatus, which can reproduce and display an image having accurate color intended by the person who took an image (an image) and has no luminance distortion for a viewer as an end user.

**BRIEF DESCRIPTION OF THE DRAWINGS**

Fig. 1A is a conceptual diagram of an image processing system including an image processing apparatus of a first embodiment.
Fig. 1B is a conceptual diagram of the image processing system including the image processing apparatus of the first embodiment.
Fig. 1C is a conceptual diagram of the image processing system including the image processing apparatus of the first embodiment.
Fig. 2 is a conceptual diagram of the image processing system including the image processing apparatus of the first embodiment.
Fig. 3A is a functional block diagram of the image processing apparatus of the first embodiment.
Fig. 3B is a functional block diagram of the image processing apparatus of the first embodiment.
Fig. 4 is a xy chromaticity diagram indicating RGBW chromaticity coordinates of a display apparatus.
Fig. 5 is a xy chromaticity diagram indicating chromaticity coordinate value of image information whose chromaticity coordinate value has already been known.
Fig. 6 is a diagram showing examples of a table indicating chromaticity coordinate value which has already been known and a table indicating chromaticity coordinate value corresponding to a display apparatus.
Fig. 7 is a schematic diagram showing an example of a hardware configuration of the image processing apparatus of the first embodiment.
Fig. 8 is a flowchart of the image processing apparatus of the first embodiment.
Fig. 9A is a functional block diagram of an image processing apparatus of a second embodiment.
Fig. 9B is a functional block diagram of an image processing apparatus of the second embodiment.
Fig. 10 is a flowchart of the image processing apparatus of the second embodiment.
Fig. 11A is a functional block diagram of an image processing apparatus of a third embodiment.
Fig. 11B is a functional block diagram of an image processing apparatus of the third embodiment.
Fig. 12 is a diagram showing an example of a double logarithmic graph indicating gamma characteristic.
Fig. 13 is a schematic diagram showing an example of a hardware configuration of the image processing apparatus of the third embodiment.
Fig. 14 is a flowchart of the image processing apparatus of the third embodiment.
Fig. 15 is a functional block diagram of an image processing apparatus of a fourth embodiment.
Fig. 16 is a flowchart of the image processing apparatus of the fourth embodiment.
Fig. 17 is a conceptual diagram of the image processing system including the image processing apparatus of a fifth embodiment.
Fig. 18 is a diagram showing an example of a color area in HSB color space.
Fig. 19 is a schematic diagram of a hardware configuration of the image processing apparatus of the fifth embodiment.
Fig. 20 is a flowchart of the image processing apparatus of the fifth embodiment.

**Description of Reference Numerals**

0100    Image processing system
0101    Image processing apparatus
0102    Imaging apparatus (video camera)

| | |
|---|---|
| 0103 | Display apparatus (television apparatus), Image processing apparatus |
| 0104 | Interface |
| 0105 | Object |
| 0300 | Image processing apparatus |
| 0301 | Transmitter |
| 0302 | Acquirer for reproducibility characteristic |
| 0303 | Converter |
| 0304 | Controller |
| 0310 | Storage |
| 0320 | Transmitter |
| 0330 | Storage for image information |
| 0340 | Converter for chromaticity coordinates |
| 0350 | Controller for chromaticity coordinates |
| 1100 | Image processing apparatus |
| 1101 | Transmitter |
| 1102 | Acquirer for reproducibility characteristic |
| 1103 | Converter |
| 1104 | Controller |
| 1110 | Storage for gamma data |
| 1120 | Transmitter |
| 1130 | Storage for image information |
| 1140 | Gamma converter |
| 1150 | Gamma controller |

## DETAILED DESCRIPTION OF THE INVENTION

Hereinafter, embodiments of the present invention will be provided. The relationship between claims and embodiments is as follows. The first embodiment will mainly describe Claims 1, 4, 8, and 12. The second embodiment will mainly describe Claims 2, 5, 9, and 13. The third embodiment will mainly describe Claims 3, 6, 10, 12, and 14. The fourth embodiment will mainly describe Claims 7, and 11. The fifth embodiment will mainly describe Claims 1, 2, 3, 4, 12, 13, and 14. The present invention is not to be limited to the above embodiments and able to be embodied in various forms without departing from the scope thereof.

**<<First Embodiment>>**

<Concept of First Embodiment>

An image processing apparatus of a first embodiment is connected directly or indirectly to a display apparatus, acquires or selects reproducibility characteristic information of the connected display apparatus, converts image information utilizing the acquired reproducibility characteristic information, such that accurate color image is reproduced by the display apparatus, and controls output of the converted image information.

Moreover, an image processing apparatus of the first embodiment is connected directly or indirectly to the display apparatus, comprises a storage for chromaticity coordinate value data of the display apparatus, selects and utilizes the data corresponding to the display apparatus connected directly or indirectly to the transmitter from the stored data, converts the image information to the chromaticity coordinates corresponding to the display apparatus, and controls output of the converted image information. This enables conversion of the image information, such that accurate color image is reproduced by the display apparatus, and control the output of the converted image information.

Thus, these apparatuses can provide the image processing apparatus, which can reproduce and display an image having accurate color intended by the person who took an image (a person who generates an image) and has no luminance distortion for a viewer as an end user. Note that the color intended by the person who took an image means not color subjectively intended by the person who took an image but the color corresponding to the image information acquired by the imaging apparatus, therefore, the color reproduced by the ideal display apparatus.

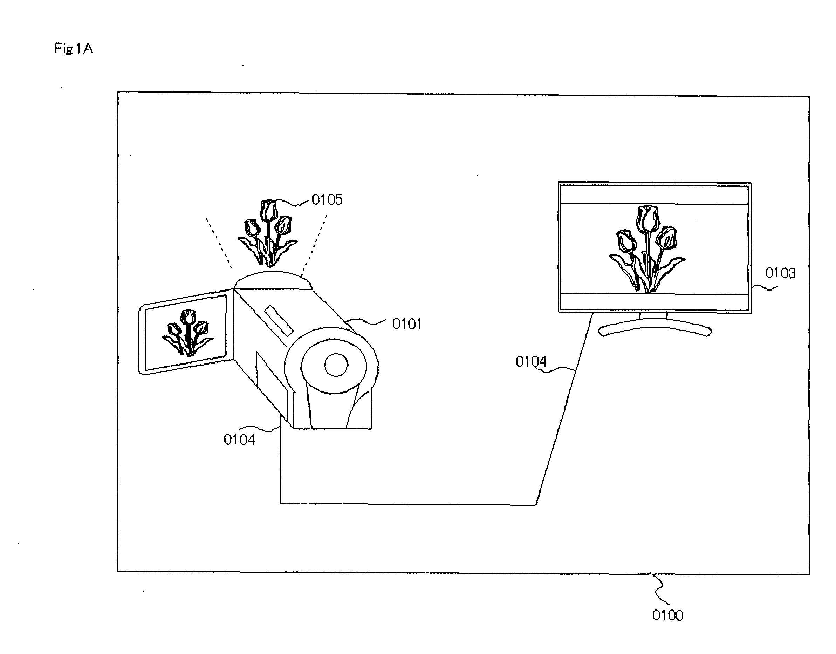

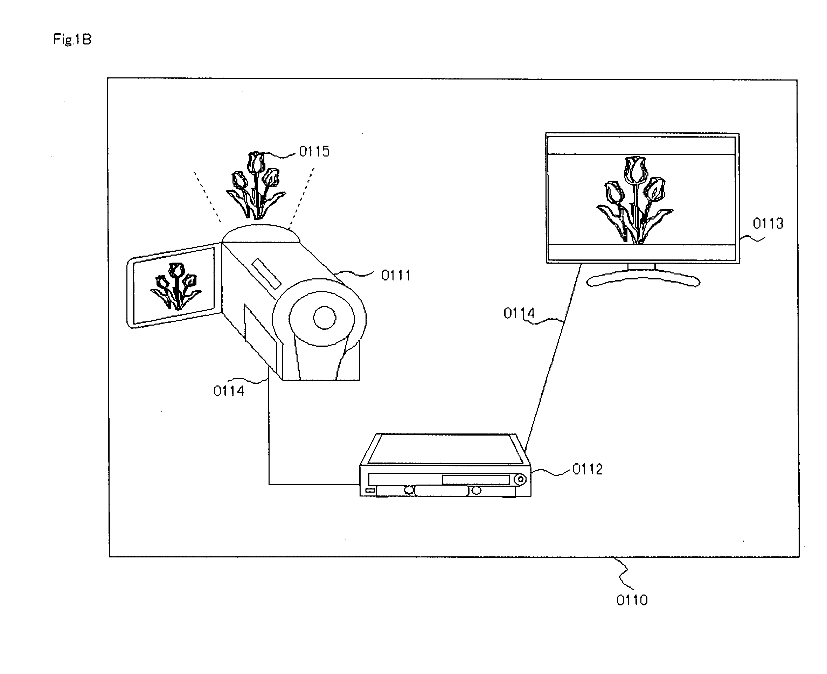

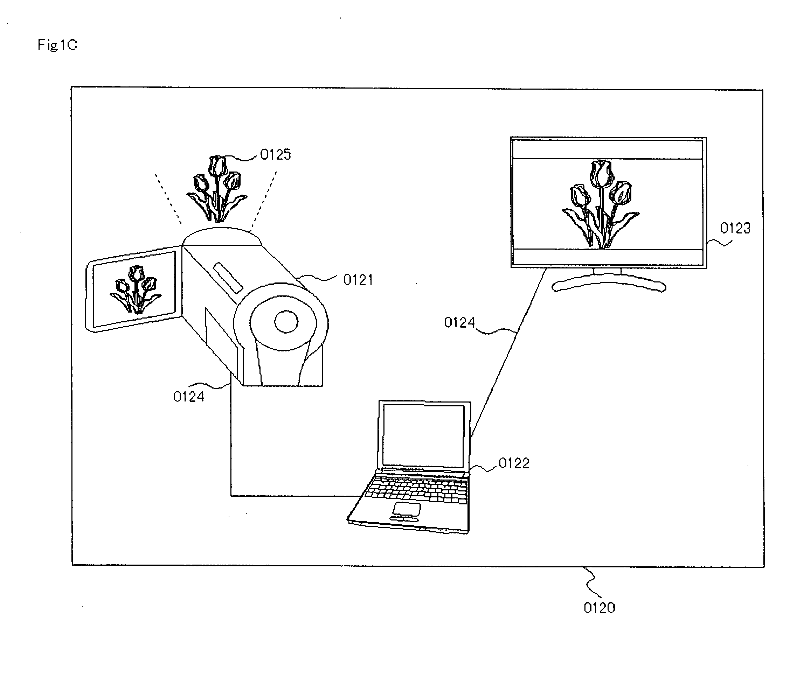

Fig. 1A, 1B and 1C are conceptual diagrams of the image processing systems including the image processing apparatuses of the first embodiment. The image processing system can include all of conversion (correction) and control function for image processing, imaging (image generating) function, recording function, and display function, and can perform color reproduction and display processes for the image signal having image characteristics corresponding to a plurality of color reproduction areas. As shown in Fig. 1A, an image processing system 0100 comprises an image processing apparatus 0101 (doubling as an imaging apparatus, and a video camera in Fig. 1A), a display apparatus 0103 (a television in Fig. 1A). These components are connected by an interface 0104. In this case, when the person takes an image of an object 0105 using this imaging apparatus, he intends and takes the image that, for example, petals are displayed as to be pure white and a stem and leaves are displayed as to be pure green on the ideal display apparatus, and the imaging apparatus transmits the above image information. Here, if the reproduction characteristic of the display apparatus is the same as that of the ideal display apparatus, the image of the object is reproduced with the color intended by the person who took the image, therefore, the petals are displayed as to be pure white and a stem and leaves are displayed as to be pure green on the above display apparatus. However, the reproduction characteristics of the display apparatus are different from those of the ideal display apparatus, if the image information transmitted from the imaging apparatus is displayed without correction (conversion), an image whose color (luminance and shade etc.) is slightly different from the image intended by the person who took an image is displayed. Therefore, this system carries out the control for executing correction of the image information transmitted from the image processing apparatus (imaging apparatus), such that the accurate color intended by the person who took the image is reproduced and displayed. Therefore, an objective of the first embodiment is to provide the image processing apparatus having functions of correction and transmission control in order to reproduce the image with accurate color. Note that, as described above, the 'accurate color' means color same as the color displayed by the ideal display without any correction for the image information transmitted from the imaging apparatus. Put simply, it means the color intended by the person who took the image.

As described above, a typical image processing apparatus of the first embodiment is the image processing apparatus as shown in Fig. 1A comprising the imaging function as well as the image processing function. Moreover, if the recording apparatus having a function of storing characteristic of chromaticity coordinate value etc. of the imaging apparatus upon imaging is provided, as shown in Fig. 1B, a configuration, in which an image processing apparatus (imaging apparatus) 0111 is indirectly connected to a display apparatus 0113 through the recording apparatus 0112, is possible. Similarly, as shown in Fig. 1C, a configuration, in which an image processing apparatus (imaging apparatus) 0121 is indirectly connected to a display apparatus 0123 through the image editing apparatus (including recording apparatus) 0122, is possible.

Thus, the image processing apparatus is required to have the function of correction and transmission control for reproducing accurate color, but it is not necessary for it to have the imaging function and the recording function. Therefore, the image processing apparatus may or may not have all or part of these functions.

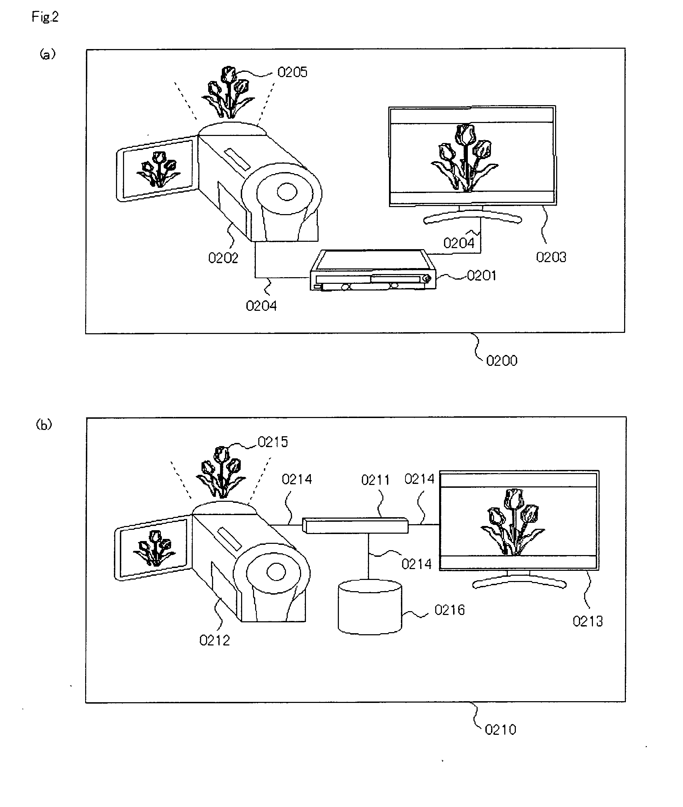

Fig. 2 is a conceptual diagram of the other image processing system including the image processing apparatus of the first embodiment. For example, as shown in Fig. 2(a), the image processing apparatus 0201 has the recording function as well as the image processing function, but does not have the imaging function, and the image processing apparatus may be directly connected to the imaging apparatus 0202 and the display apparatus 0203. Moreover, as show in Fig. 2(b), a configuration, in which the image processing apparatus 0211 does not have both the imaging function and the recording function, and has only the image processing function (conversion and control), transmits the image information transmitted from the imaging apparatus 0212 to the display apparatus 0213, and the image information is transmitted to the recording apparatus 0216 and is recorded, may be utilized.

<Configuration of First Embodiment>

(Overall Configuration)

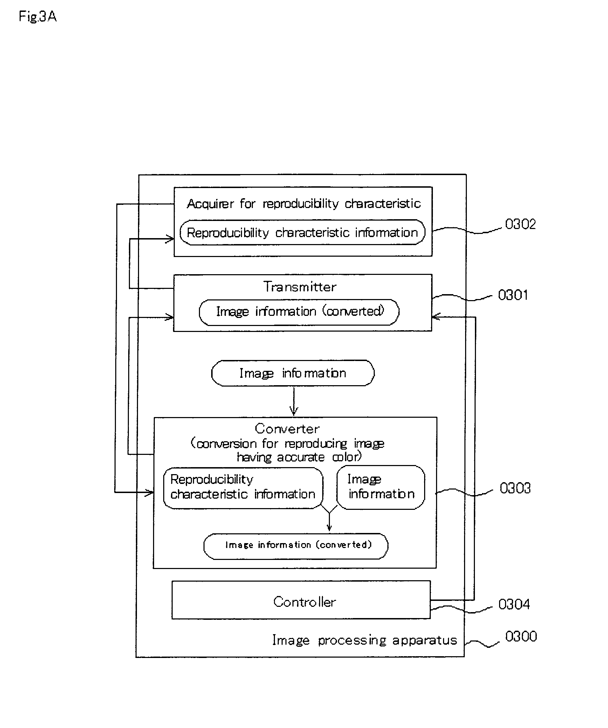

Fig. 3A is a functional block diagram of the image processing apparatus of the first embodiment. In Fig. 3A, an 'image processing apparatus' 0300 comprises a 'transmitter' 0301, an 'acquirer for reproducibility characteristic' 0302, a 'converter' 0303, and a 'controller' 0304.

(Transmitter)

The 'transmitter' is configured to directly or indirectly connect a display apparatus, and to transmit image information. Therefore, a first function of the transmitter is a function of connecting the display apparatus to the image processing apparatus itself through the interface. This enables transmission of the image information converted according to the reproducibility characteristic of the display apparatus (Note that, as described above, when the image processing apparatus directly acquires the chromaticity coordinates from the display apparatus through the interface and stores it, ahead of the above processing (1), it is necessary to once connect the image processing apparatus and the display apparatus.)

Note that, as to the terms 'directly or indirectly connect', the image processing apparatus and the display apparatus may be directly connected through the interface, may be mutually connected through wireless communication etc., or may be indirectly connected through a recording apparatus as shown in Fig. 1B or the image editing apparatus as shown in Fig. 1C.

Moreover, the number of the connected display apparatuses may be singular or plural (the case of connecting

7

a plurality of display apparatuses will be described in other embodiments). Any type of interface for the connection may be utilized.

A second function of the transmitter is transmission of the image information to the connected display apparatus. Any type of interface for transmitting the image information may be utilized. Note that, Fig. 1A shows the transmission means in the case of transmitting the image information from the imaging apparatus connected to the image processing apparatus to the image processing apparatus, and also in this case, any type of interface between the imaging apparatus upon receiving the image information may be utilized. Moreover, the interface intermediating the connection between the imaging apparatus and the image processing apparatus and the interface intermediating the image processing apparatus and the display apparatus do not necessarily have to be the same type.

(Acquirer for reproducibility characteristic)

The 'acquirer for reproducibility characteristic' is configured to acquire or select reproducibility characteristic information of the connected display apparatus. In the first embodiment, the 'reproducibility characteristic' means information indicating the reproducibility characteristic of the display apparatus, the 'reproducibility' means characteristic indicated by the numerical value data as to how a specific color is expressed in the color space upon displaying the image on the display apparatus. For example, this reproducibility characteristic is expressed by the chromaticity coordinate value.

The 'chromaticity coordinates' expresses coordinates position of color in the color space, and is generally expressed by the chromaticity diagram. A representative example of the chromaticity coordinates is the 'RGBW chromaticity coordinates' corresponding to the RGBW color space, and the RGBW color space shows the chromaticity coordinates in the color space of R (Red), G (Green), B (Blue), and W (white). Therefore, based on difference between the coordinates positions indicating the respective pure colors of R, G, B and W, it is possible to acquire the difference of the reproducibility characteristic of the display by the numerical value, and to carry out correction for reproducing the image of accurate color based on this difference. Hereinafter, a description of the case where the chromaticity coordinates is the RGBW chromaticity coordinates will be provided. The chromaticity coordinates available in the first embodiment is not limited to this, and for example, the chromaticity coordinates for HSB (Hue, Saturation, and Brightness) color space utilized for the case of drawing an image by a computer, and YCbCr (Y is brightness, Cb is differential signal of blue, and Cr is differential signal of red) color space utilized for broadcasting may be used.

When the acquirer for reproducibility characteristic acquires the reproducibility characteristic information of the display apparatus, as described above, the reproducibility characteristic information may be acquired from the display apparatus after connecting the display apparatus through the interface, or may be acquired from an apparatus other than the display apparatus through the interface. Moreover, when a plurality of reproducibility characteristic information exists, the acquisition method thereof is not limited to any one of the above, and both methods may be used.

Note that, as described above, the 'acquisition' is to store the reproducibility characteristic information directly or indirectly from the display apparatus to the main memory of the image processing apparatus through the interface, and the 'selection' is to select all or a part of the reproducibility characteristic information (may be singular or plural) stored in the main memory of the image processing apparatus or the storage, and to carry our storage thereof in the main memory.

(Converter)

The 'converter' is configured to convert image information utilizing the reproducibility characteristic information acquired by the acquirer for reproducibility characteristic, such that accurate color is reproduced by the display apparatus.

The 'accurate color' is, as described above, the color same as that displayed when the image information transmitted from the imaging apparatus is displayed on the ideal display without any correction. The actual display apparatus has the reproducibility characteristic different from the characteristic included in the image information transmitted from the imaging apparatus, so that by utilizing the numerical value data indicated by the reproducibility characteristic information included in the image information and the numerical value data indicated by the reproducibility characteristic-information of the display apparatus, the image information is converted, so that the former numerical value data is the same as the latter numerical value data. This conversion makes it possible to display the image with the color the same as that displayed when the image information transmitted from the imaging apparatus is displayed on the ideal display without any correction. In other words, this conversion enables reproduction of the image with the accurate color intended by the person who took the image by the display apparatus.

Concrete examples of the conversion will be described in the embodiment of the image processing apparatus comprising the converter for chromaticity coordinates.

(Controller)

The 'controller' is configured to cause the transmitter to transmit the converted image information. Concretely speaking, instruction information to transmit the converted image information to the connected display apparatus is generated, and is sent to the transmitter. As a result, the transmitter can transmit the converted image information acquired in the above to the display apparatus connected through the interface.

(Other Configurations (1): Example of using the chromaticity coordinate value data as the reproducibility characteristic)

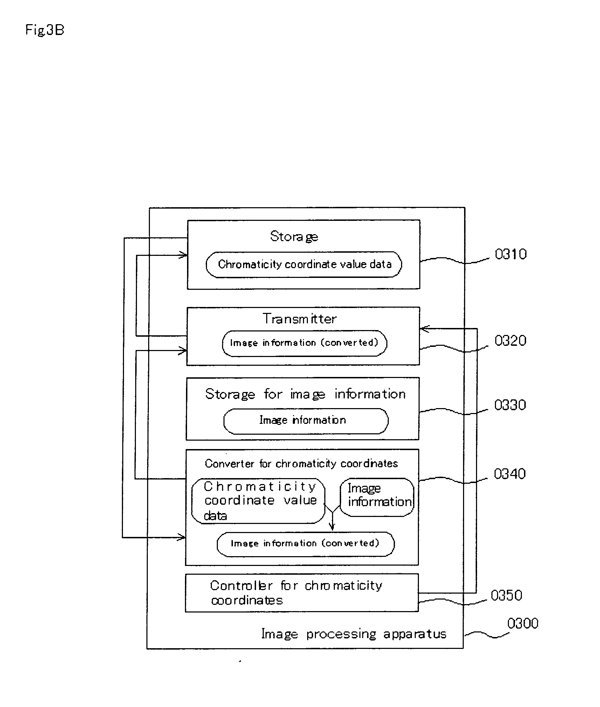

Fig. 3B is another functional block diagram of the image processing apparatus of the first embodiment. In Fig. 3B, the 'image processing apparatus' 0300 comprises a 'storage' 0310, a 'transmitter' 0320, a 'storage for image information' 0330, a 'converter for chromaticity coordinates' 0340, and a 'controller for chromaticity coordinates' 0350. The image processing apparatus of the first embodiment has the same configuration to carry out the conversion and the control of transmission, so that the image with accurate color is reproduced on the display apparatus as that of the image processing apparatus as show in Fig. 3A, and has another aspect of utilizing the chromaticity coordinate value data as the reproducibility characteristic information.

(Storage)

The 'storage' is configured to store the chromaticity coordinate value data, which indicates a chromaticity coordinate read out from the display apparatus. Therefore, the chromaticity coordinates to be stored may be singular or plural. When carrying out this storage, as described above, the chromaticity coordinates may be acquired from the display apparatus after connecting the display apparatus through the interface, or may be acquired from an apparatus other than the display apparatus through the interface. Moreover, when storing a plurality of chromaticity coordinate value data, acquisition method thereof is not limited to any one of the above, and both methods may be used.

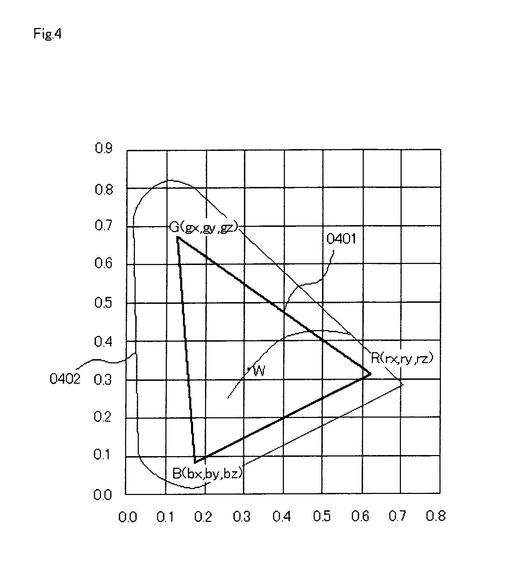

Fig. 4 is a xy chromaticity diagram based on XYZ color system indicating RGBW chromaticity coordinates of a display apparatus. The XYZ color system is for remedying inconveniences of the RGB color system, therefore, a color system utilizing the RGBW chromaticity coordinates corresponding to the above RGBW color space. Therefore, in the RGB color system, it is necessary to use a negative coefficient for RGB, and to extend the color space in order to express colors outside of the RGB color space. Here, in the XYZ color system based on the RGB color system, the negative value does not appear by simple position conversion. Moreover, xyZ color system expresses the XYZ color system in an easy-to-understand manner, and can express all colors by the expression elements xy (chromaticity) and Y (brightness). Note that, in Fig. 4, for the sake of convenience, the xy chromaticity diagram is used. In the xy chromaticity diagram, color element Y is omitted from color elements xy and Y, and all colors are expressed by 2D surface of the xy element, therefore, by chromaticity coordinates (description of the present invention is provided using (x,y,z) coordinates as the real coordinates, and the same applies to the case of using X, Y, Z values for acquiring the coordinates). Therefore, the R,G,B and the X,Y,Z, and x,y,z, which derives therefrom, can be mutually converted, thereby expressing the coordinates of any color on the xy chromaticity diagram. As after-mentioned, the conversion of chromaticity coordinates is executed by using 3x3 matrix.

In the xy chromaticity diagram, saturation increases as closing to the peripheral portion, In this diagram the respective points indicated by R, G, B express pure red, pure green, and pure blue as three primal colors. Meanwhile, the portion near the central portion corresponds to white (achromatic color), the point expressed by W in this diagram is reference white. The range can be expressed by the display apparatus is the range of a triangle 0401 formed by the three points of R,G and B including W. These coordinates of R, G, B and W are different depending on the display apparatus. Note that the graphic 0402 expresses a spectrum locus indicating a range recognizable by a human, and actually, the triangle 0401 is included in this graphic 0402, This enables all colors within the range of the triangle formed by R, G, and B to be expressed by the combination of numerical values, thereby reproducing them to be recognizable on the display apparatus

Concretely speaking, any color within the range of the triangle formed by R, G, and B is expressed by the coordinates of x, y on the 2D surface. Here, x, y, z are respectively expressed by formulas of (Formula 1). Note that, this formula includes z, and as shown in this formula, the z is acquired by deriving x, y from 1. As the x, y, z, generally, as the value of x increases, redness becomes stronger, and as the value of y increases, greenness becomes stronger. In addition, as the value of z increases, therefore, as the values of x and y decrease on the xy chromaticity diagram, blueness becomes stronger. Thus, all of x, y, z can be expressed by the coordinates on the 2D surface.

$$(\text{Formula 1}) \quad x = X/(X+Y+Z), \quad y = Y/(X+Y+Z), \quad z = Z/(X+Y+Z)$$

Here, x, y, z are expression elements in the XYZ color system, and as shown in the above (Formula 1), X and Z can be expressed by a formula using x, y, and Y in (Formula 2) (Note that, Y is utilized as it is in the xyY color system).

$$\text{(Formula 2)} \quad X=xY/y, \ Z=(1\text{-}x\text{-}y)Y/y$$

Moreover, R,G,B and X,Y,Z has a relationship as shown in the following (Formula 3).

(Formula 3)

$$\begin{pmatrix} X \\ Y \\ Z \end{pmatrix} = \begin{bmatrix} 0.412453 & 0.357580 & 0.180423 \\ 0.212671 & 0.715160 & 0.072169 \\ 0.019334 & 0.119193 & 0.950227 \end{bmatrix} \times \begin{pmatrix} R \\ G \\ B \end{pmatrix}$$

$$\begin{pmatrix} R \\ G \\ B \end{pmatrix} = \begin{bmatrix} 3.240479 & -1.537150 & -0.498535 \\ -0.969356 & 1.875991 & 0.041556 \\ 0.055648 & -0.204043 & 1.057311 \end{bmatrix} \times \begin{pmatrix} X \\ Y \\ Z \end{pmatrix}$$

As a result, R, G, B and x, y can be mutually converted, thereby expressing the coordinates of any color on the xy chromaticity diagram by using R, G, and B. Accordingly, when three coordinates of R, G, and B are determined, a coordinate of any point is unambiguously determined. Therefore, when the image processing apparatus as a transmitter of the image information and the display apparatus as a destination of the transmission (receiver) share the coordinates of R, G, and B, both apparatuses can share the coordinates of the above any point. In other words, the color indicated by the image information transmitted from the image processing apparatus can be accurately reproduced and displayed on the display apparatus. However, as described above, the color reproducibility is actually different depending on the display apparatus. Therefore, in order to accurately reproduce and display the color included in the image information transmitted from the image processing apparatus on the display apparatus, it is necessary to convert the image information acquired from the imaging apparatus according to the reproducibility characteristic of the display apparatus.

In the present invention, the image processing apparatus preliminarily acquires the reproducibility characteristic of the display apparatus, and transmits the converted image information after the image processing apparatus converts the image information according to the reproducibility characteristic, thereby enabling reproduction of the image with the accurate color on the display apparatus.

The 'chromaticity coordinate value data' is data acquired by relating the identification information of the display apparatus to the chromaticity coordinate values of the respective R, G, and B as to colors displayable on the display apparatus, and may be stored as a table thereof or a function (an example of the table is presented with a table of chromaticity coordinate value of the imaging apparatus in the after-mentioned configuration of the storage for image information).

(Transmitter)

The 'transmitter' is configured to directly or indirectly connect a display apparatus, and transmit image information. Therefore, a first function of the transmitter is a function of connecting the display apparatus to the image processing apparatus itself through the interface. This enables transmission of the image information converted according to the reproducibility characteristic of the display apparatus (Note that, as described above, when the image processing apparatus directly acquires the RGBW chromaticity coordinates from the display apparatus through the interface and stores it, ahead of the above processing (1), it is necessary to once connect the image processing apparatus and the display apparatus.)

Note that, as to the terms 'directly or indirectly connect', the image processing apparatus and the display apparatus may be directly connected through the interface, may be mutually connected through wireless communication etc., or may be indirectly connected through recording apparatus as shown in Fig. 1B or the image editing apparatus as shown in Fig. 1C. Moreover, the number of the connected display apparatuses may be singular or plural (the case of connecting a plurality of display apparatuses will be described in another embodiment). Any type of interface for the connection may be utilized.

A second function of the transmitter is transmission of the image information to the connected display apparatus. Any type of interface for transmitting the image information may be utilized. Note that, Fig. 1A shows the transmission means in the case of transmitting the image information from the imaging apparatus connected to the image processing apparatus to the image processing apparatus, and also in this case, any type of interface between the imaging apparatus upon receiving the image information may be utilized. Moreover, the interface intermediating the connection between the imaging apparatus and the image processing apparatus and the interface intermediating the image processing apparatus and the display apparatus do not necessarily have to be the same type.

(Storage for image information)

The 'storage for image information' is configured to store the image information whose chromaticity coordinate value has already been known. The 'image information whose chromaticity coordinate value has already been known' means that, for example, when converting the image information transmitted from the imaging apparatus and transmitting it to the display apparatus, the chromaticity coordinate value of the imaging apparatus used for the imaging has preliminarily been acquired. Therefore, the imaging apparatus has the chromaticity coordinate value indicating the imaging characteristic unique to the apparatus, so that, as described below, this chromaticity coordinate value is utilized for calculating an amount of correction by comparing it with the chromaticity coordinate value of the display apparatus when correcting the image information to the chromaticity coordinate value corresponding to the display apparatus connected to the transmission means in order to enable the reproduction of the accurate color by the display apparatus. Therefore, it is necessary for the image processing apparatus to preliminarily acquire the chromaticity coordinate value of the image taken by the imaging apparatus before the conversion. The chromaticity coordinate value of the image information to be stored may be acquired upon acquiring the image information by the image processing apparatus from the imaging apparatus, or may be acquired by another method (for example, acquiring from a server of a company having a data base for the chromaticity coordinate value).

Note that, the image information may be moving image information or still image information.

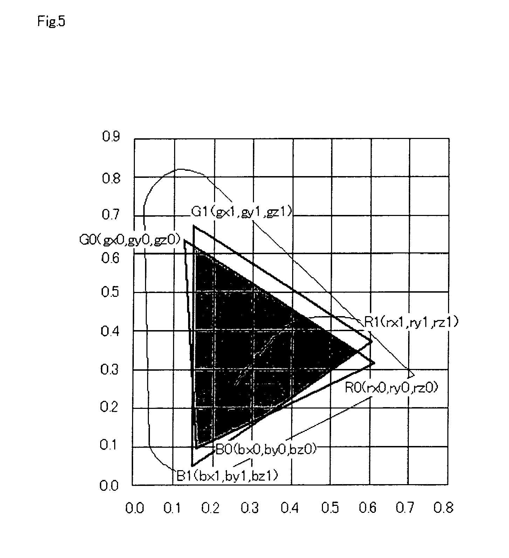

Fig. 5 is a xy chromaticity diagram indicating chromaticity coordinate value of image information whose chromaticity coordinate value has already been known. In Fig. 5, the respective points indicating pure colors of red, green, and blue, and the coordinate values thereof are R0(rx0, ry0, rz0), G(gx0, gy0, gz0), and B0(bx0, by0, bz0). This is a color reproducibility range of the display apparatus expected in the imaging system. In addition, in Fig. 5, the chromaticity coordinate value of the display apparatus is superimposedly expressed. Accordingly, in Fig. 5, respective points indicating pure colors of red, green, and blue, and the coordinate values thereof which are relating to the display apparatus, are R1(rx1, ry1, rz1), G1(gx1, gy1, gz1), and B1(bx1, by1, bz1). This Fig. 5 shows a difference between the color reproducibility range expected in the imaging apparatus and the color reproducibility range of the display apparatus. Here, the after-mentioned converter for chromaticity coordinates converts the image information to the chromaticity coordinates corresponding to the display apparatus, and transmits the converted image information to the display apparatus, thereby enabling reproduction of the image with accurate color and display thereof on the display apparatus (therefore, the reproduction of the accurate color intended by the person who took the image). Note that, similarly to the chromaticity coordinate value of the display apparatus, the chromaticity coordinate value already acquired may be stored as a table.

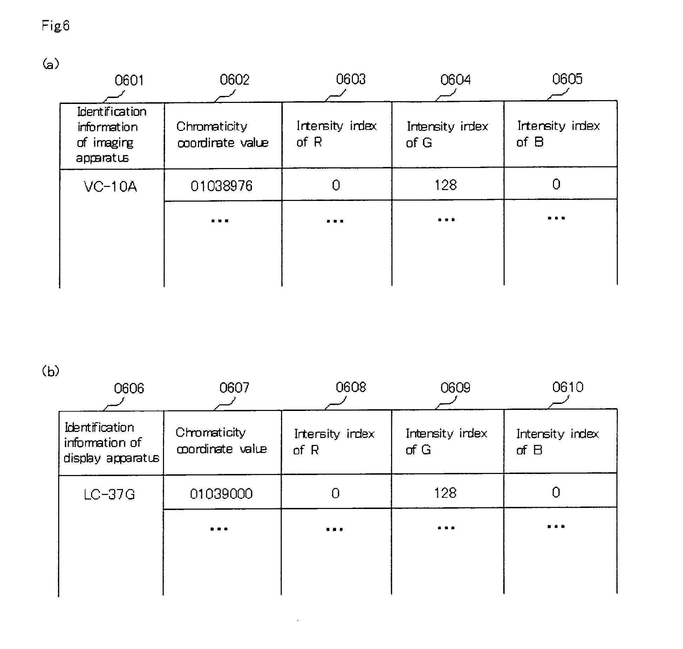

Fig. 6(a) is a diagram showing examples of a table indicating chromaticity coordinate value, which has already been known. When a plurality of imaging apparatuses exists, a plurality of tables corresponding to the number of the imaging apparatuses may be stored. In this case, the respective tables are identified by the identification information of the imaging apparatus. In Fig.6, the identification information 0601 of the imaging apparatus is 'VC-10A', and as to all displayable colors (for example, 16,777,216 colors displayable by 24 bits), the chromaticity coordinate value 0602 with respect to each color is indicated by intensity indexes 0603-0605 of the respective R, G, and B. For example, when the chromaticity coordinate value of pure green is '01038976', this is expressed by the intensity indexes '0', '128', and '0' of the respective R, G, and B.

Fig. 6(b) is a diagram showing examples of a table indicating chromaticity coordinate value corresponding to the above display apparatus. In Fig.6, the identification information 0606 of the display apparatus is 'LC-37G', and similar to Fig. 6(a), as to all displayable colors, the chromaticity coordinate value 0607 with respect to each color is indicated by intensity indexes 0608-0610 of the respective R, G, and B. For example, when the chromaticity coordinate value of pure green is '01039000', this is expressed by the intensity indexes '0', '128', and '0' of the respective R, G, and B.

(Converter for chromaticity coordinates)

The 'converter for chromaticity coordinates' is configured to convert the image information stored by the storage for image information to the chromaticity coordinates corresponding to the display apparatus by selecting and utilizing data corresponding to the display apparatus connected directly or indirectly to the transmitter from the chromaticity coordinate value data of the display apparatus stored by the storage. The selection of the chromaticity coordinate value data corresponding to the display apparatus can be carried out, for example, by acquiring the identification information of the display apparatus (e.g., model reference number) through the interface from the connected display apparatus, and by collating the identification information with the identification information of the display apparatus added with respect to each chromaticity coordinate value data stored by the storage.

Subsequently, the description of a concrete configuration for converting the chromaticity coordinates, which has already been known, included in the image information to the chromaticity coordinates corresponding to the display apparatus by utilizing the chromaticity coordinate value data thus selected is provided. For example, when the RGBW chromaticity coordinates of the image information, whose RGBW chromaticity coordinates has already been known, are $R0(rx0, ry0, rz0)$, $G(gx0, gy0, gz0)$, and $B0(bx0, by0, bz0)$, and the coordinates of the selected display are $R1(rx1, ry1, rz1)$, $G1(gx1, gy1, gz1)$, and $B1(bx1, by1, bz1)$, the converter for chromaticity coordinates executes the conversion utilizing the $3 \times 3$ matrix of (Formula 4).

(Formula 4)

$$
\begin{pmatrix} rx0 & gx0 & bx0 \\ ry0 & gy0 & by0 \\ rz0 & gz0 & bz0 \end{pmatrix} = k \ \times \begin{pmatrix} rx1 & gx1 & bx1 \\ ry1 & gy1 & by1 \\ rz1 & gz1 & bz1 \end{pmatrix}
$$

Here, the 'k' is a conversion coefficient, and the value of k is expressed by (Formula 5) based on (Formula 4).

(Formula 5)

$$k = \begin{pmatrix} rx0 & gx0 & bx0 \\ ry0 & gy0 & by0 \\ rz0 & gz0 & bz0 \end{pmatrix} \times \begin{pmatrix} rx1 & gx1 & bx1 \\ ry1 & gy1 & by1 \\ rz1 & gz1 & bz1 \end{pmatrix}^{-1}$$

Subsequently, the coefficient k is multiplied by the image information, whose RGBW chromaticity coordinates have already been known, thereby acquiring the image information converted to the RGBW chromaticity coordinates corresponding to the display apparatus. The acquired image information is transmitted to the transmitter.

This conversion may be executed by utilizing the table of Fig. 6, and for example, viewing from the imaging apparatus, the chromaticity coordinate value expressing pure green on the ideal display apparatus and the intensity indexes of R, G, and B have already been known, so that these values corresponding to the connected display apparatus are acquired, and the value for carrying out the output by such intensity indexes is calculated, thereby executing the conversion utilizing the calculated value as the coefficient.

(Controller for chromaticity coordinates)

The 'controller for chromaticity coordinates' is configured to cause the transmitter to transmit the converted image information. Concretely speaking, the controller for chromaticity coordinates generates instruction information to transmit the converted image information to the connected display apparatus, and sends it to the transmitter. As a result, the transmitter can transmit the converted image information acquired in the above to the display apparatus connected through the interface.

(Hardware Configuration of First Embodiment)

Subsequently, the description of a hardware configuration of the image processing apparatus of the first embodiment is provided. Here, an example of an image processing apparatus utilizing the chromaticity coordinates data as the reproducibility characteristic information as shown in Fig. 3B as a functional block diagram is described. Basically, the same applies to a hardware configuration of the image processing apparatus as shown in Fig. 3A as a functional block diagram.

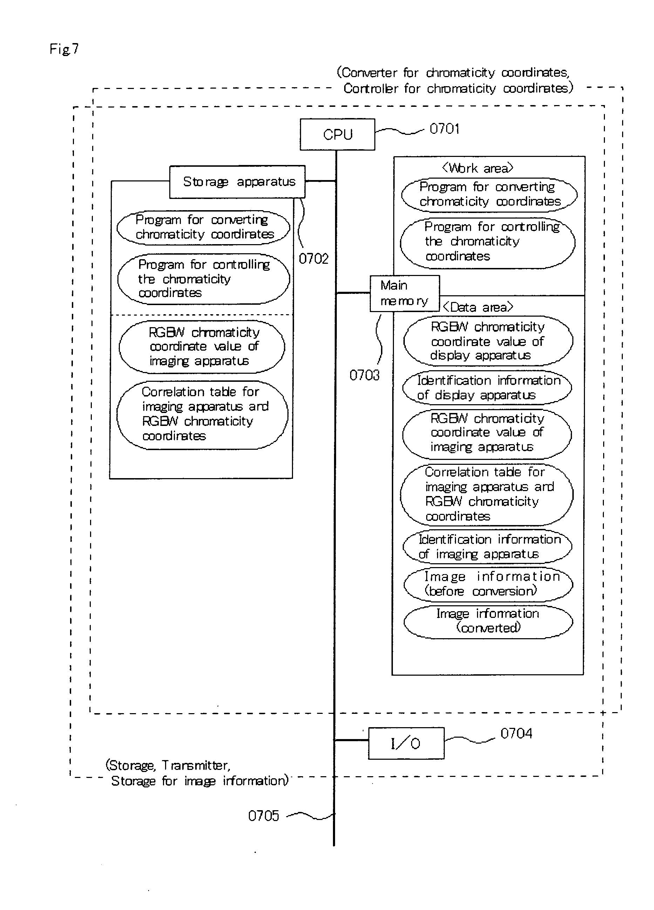

Fig. 7 is a schematic diagram showing an example of a hardware configuration of the image processing apparatus of the first embodiment. As shown in Fig. 7, the storage, the transmitter, and the storage for image information of the image processing apparatus of the first embodiment are configured by a 'CPU' 0701, a 'storage apparatus' 0702, a 'main memory' 0703, and a 'I/O' 0704. The converter for chromaticity coordinates and the controller for chromaticity coordinates are configured by the 'CPU', the 'storage apparatus', and the 'main memory'. These components are mutually connected by a 'system bus' 0705 as a data communication path, and carry out transmission/reception of the information. The storage apparatus stores various programs executed by the CPU. In addition, the main memory provides a work area for execution of the programs by the CPU. Moreover, a plurality of memory addresses are assigned to the main memory and the storage, and the program executed by the CPU specifies the memory address and makes access thereto for mutually exchanging data, thereby carrying out processings. In the first embodiment, a program for converting the chromaticity coordinates and a program for controlling the chromaticity coordinates are stored in the storage apparatus, and, for example, these programs are automatically read out from the storage apparatus upon power-on, and resident in the main memory.

At the outset, the image processing apparatus has a configuration for storing the chromaticity coordinate value data, and in a concrete configuration thereof, (1) when the image processing apparatus acquires the RGBW chromaticity coordinates from the display apparatus after connection of the display apparatus through the interface, for example, the RGBW chromaticity coordinates written in a EEPROM (Electronically Erasable and Programmable Read Only Memory) of the display apparatus is acquired by the CPU through the interface. In addition, (2) when acquiring the RGBW chromaticity coordinates from an apparatus other than the display apparatus through the interface, for example, the CPU transmits request information for the RGBW chromaticity coordinates of the display apparatus to a server of a company having a data base for the RGBW chromaticity coordinates of the display apparatus, and acquires the RGBW chromaticity coordinates from the server through the interface. The acquired RGBW chromaticity coordinates are once stored in the main memory. At this time, it is necessary to make the correspondence between the RGBW chromaticity coordinates and the display apparatus identifiable, so that the RGBW chromaticity coordinates are correlated with the identification information (e.g., a model reference number) of the display apparatus, and are stored. Additionally, the CPU may cause the storage to store the RGBW chromaticity coordinates.

Moreover, the CPU acquires the image information whose RGBW chromaticity coordinates have already been known, from the imaging apparatus through the interface. The configuration, in which the RGBW chromaticity coordinates of the imaging apparatus and the table for correlation between the identification information of the display apparatus and the RGBW chromaticity coordinates (a correlation table for imaging apparatus and RGBW chromaticity coordinates) are preliminarily stored in the storage, and meanwhile, the identification information of the imaging apparatus is correlated with the image information upon acquiring the image information, thereby searching and specifying the RGBW chromaticity coordinates by using the correlation table for imaging apparatus and RGBW chromaticity coordinates read out on the main memory, enables to preliminarily know the RGBW chromaticity coordinates. The configuration for preliminarily acquiring the RGBW chromaticity coordinates is the same as that for acquiring the RGBW chromaticity coordinates of the display apparatus.

Subsequently, the CPU connects the display apparatus through the interface. Concretely speaking, for example, communication for identifying the apparatus between the image processing apparatus physically and the display apparatus, which are connected through a USB (Universal Serial Bus) cable is carried out, and in this communication, the CPU of the image processing apparatus reads out the identification information of the display apparatus, and identifies the display apparatus, thereby carrying out the connection. The identification information of the display apparatus is once stored in the main memory. The number of the display to be connected may be singular or plural. Moreover, as described above, since the type of the interface is not limited, concretely speaking, a wired communication method such as USB, i-LINK, DVI (Digital Visual Interface), or HDMI (High-Defmition Multimedia Interface), a infrared communication method such as IrSimple, or a wireless communication method other than the infrared communication method such as Bluetooth (registered trademark), UWB (Ultra Wide Band), or millimeter wave may be used.

Subsequently, the CPU executes the program for converting the RGBW chromaticity coordinates to carry out the conversion of the RGBW chromaticity coordinates. This processing is formed by (1) the processing of selecting the chromaticity coordinate value data corresponding to the display apparatus connected to the transmitter from the chromaticity coordinate values stored in the main memory, and (2) the processing of converting the image information, whose RGBW chromaticity coordinates has already been known, to the RGBW chromaticity coordinates corresponding to the connected display apparatus. In the selection of the processing (1), for example, the CPU refers to the table for correlating the identification information of the connected display apparatus with the chromaticity coordinate value data based on the identification information of the connected display apparatus (e.g., model reference number), thereby selecting the chromaticity coordinate value data correlated with the identification information from the chromaticity coordinate value data of the display apparatus stored in the main memory. The selected chromaticity coordinate value data is once stored in the main memory.

Subsequently, the description of a concrete configuration for the conversion (2) is provided. In this case, the CPU executes the program for converting the chromaticity coordinates, and carries out the conversion of the image information based on the image information stored in the main memory after the above series of processing, the correlation table for imaging apparatus and RGBW chromaticity coordinates, and the selected chromaticity coordinate value data. This program for converting the chromaticity coordinates determines a procedure of calculation in accordance with the conversion rule based on the formula for mutual conversion of R, G, B and x, y, which is expressed by the above-mentioned formulas. In the calculation executed by the CPU in accordance with the procedure determined by the program, the coefficient k is acquired, so that the value indicating coordinates of R, G, B, and W in the chromaticity coordinates of the selected display apparatus is identical with the value indicating coordinates of R, G, B, and W in the chromaticity coordinates of the imaging apparatus (i.e., both coordinates of R, G, B, and W overlap on the xy chromaticity diagram), and the k is multiplied by the image information, thereby carrying out the conversion. The converted image information is once stored in the main memory.

Moreover, the CPU executes the program for controlling the chromaticity coordinates to control of transmission of the converted image information to the display apparatus. Concretely speaking, the CPU reads out the identification information of the display apparatus stored in the main memory, and transmits the image information to the display apparatus through the I/O in accordance with the procedure in order to transmit the converted image information to the display apparatus identified by the above identification information, in which the procedure has been determined by the program for controlling the chromaticity coordinates.

(Other Configuration (2): Processing the image signal from the recording system)

In the above description, the example, in which the image processing apparatus carries out the conversion for accurate reproduction of the image signal from the imaging system (imaging apparatus) by the display apparatus, and controls transmission thereof to the display apparatus, has been mainly described. However, the image processing apparatus of the first embodiment is not limited to this, and may carry our similar processing for the image signal from the recording system (recording apparatus). In this case, for example, the image information, whose RGBW chromaticity coordinates has already been known and stored in the storage for image information, is correlated with the RGBW chromaticity coordinate value and stored in the storage, or when using the recording apparatus external to the image processing apparatus, the image information is transmitted with the RGBW chromaticity coordinate value also to the recording apparatus upon transmitting the image information to the display apparatus, and is recorded by the recording apparatus, thereby enabling the conversion and transmission control.

<Processing Flow of First Embodiment>

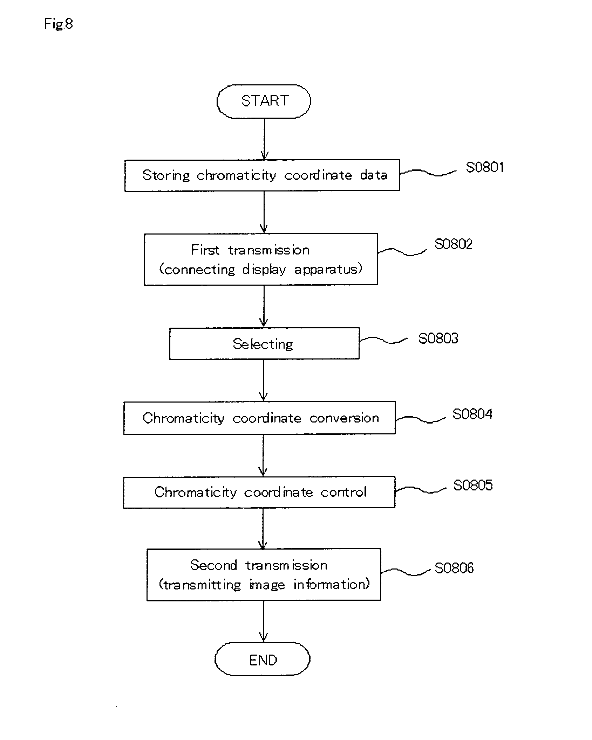

Fig. 8 is a flowchart of the image processing apparatus of the first embodiment. Here, an example of the image processing apparatus utilizing the chromaticity coordinate value data as the reproducibility characteristic information as shown in Fig. 3B is described again, and the processing flow in the image processing apparatus as shown in Fig. 3A is basically the same.

The processing flow of the first embodiment has the following steps.

At the outset, in a step of storing chromaticity coordinate value data S0801, the image processing apparatus stores more than one chromaticity coordinate value data indicating the RGBW chromaticity coordinates of the display apparatus.

Subsequently, in a step of first transmission S0802, the image processing apparatus carries out connection of the display apparatus.

Subsequently, in a step of selecting S0803, the image processing apparatus selects data corresponding to the display apparatus connected by the step of first transmission S0802 from the chromaticity coordinate value data of the display apparatus stored by the step of storing chromaticity coordinate value data S0801.

Subsequently, in a step of converting chromaticity coordinates S0804, the image processing apparatus converts the image information stored by the storage for image information, whose RGBW chromaticity coordinates has already been known, to the RGBW chromaticity coordinates corresponding to the display apparatus connected by the step of first transmission S0802 by utilizing the chromaticity coordinate value data selected by the step of selecting S0803.

Subsequently, in a step of controlling chromaticity coordinates S0805, the image processing apparatus controls transmission of the image information converted by the step of converting chromaticity coordinates S0804.

Subsequently, in a step of second transmission S0806, the image processing apparatus transmits the image information in accordance with the control by the step of controlling chromaticity coordinates S0805.

<Brief Description of Effects of First Embodiment>

According to the present invention, when the correction (conversion) of the image signal from the imaging system and recording system in order to accurately reproduce the image signal, the conversion is carried out as if the ideal display apparatus for the person who took image (a person who generates image) carries out the correction (conversion). This makes it possible to provide the image processing apparatus, which can reproduce and display an image having accurate color intended by the person who took an image (a person who generates an image) and has no luminance distortion for a viewer as an end user.

**<<Second Embodiment>>**

<Concept of Second Embodiment>

An image processing apparatus of a second embodiment that is connected directly or indirectly to a plurality of display apparatuses, acquires or selects the reproducibility characteristic information of the plurality of display apparatuses, converts the image information utilizing the respective reproducibility characteristic information acquired by the acquirer for reproducibility characteristic, such that an image having color standardized between the plurality of display apparatuses is reproduced by the plurality of display apparatuses, and controls transmission of the converted image information.

Moreover, the image processing apparatus of the second embodiment further comprises a plurality of transmission means for transmitting the image information to a display apparatus connected directly or indirectly to the display apparatus, a plurality of conversion means for chromaticity coordinates converting the chromaticity coordinates corresponding to the plurality of display apparatuses, and a control means for chromaticity coordinates carrying out control for causing the transmission means to simultaneously transmit the image information converted by the plurality of conversion means for chromaticity coordinates to the corresponding display apparatuses. This image processing apparatus has the same aspect as the above-mentioned image processing apparatus in terms of reproducing an image having color standardized between the plurality of display apparatuses by the plurality of display apparatuses, and controls transmission of the converted image information.

<Configuration of Second Embodiment>

(Overall Configuration)

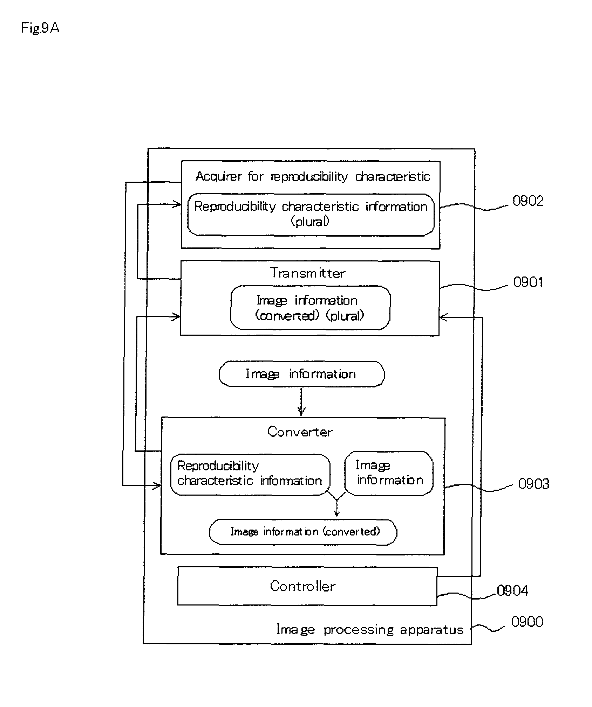

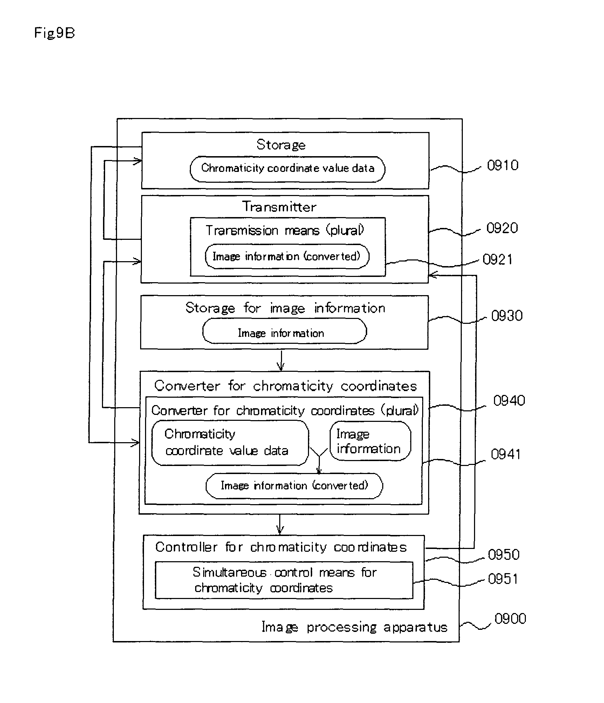

Fig. 9 is a functional block diagram of an image processing apparatus of the second embodiment. An 'image processing apparatus' 0900 of Fig. 9 comprises a 'transmitter' 0901, an 'acquirer for reproducibility characteristic' 0902, a 'converter' 0903, and a 'controller' 0904.

(Objective of Configuration of Second Embodiment)

An objective of the configuration of the second embodiment is that one image is simultaneously displayed on a plurality of display apparatuses, and when displaying one image by dividing it on a plurality of display apparatuses, the image is reproduced with the accurate color on any display apparatus as intended by the person who took an image, and the image having color standardized between the plurality of display apparatuses is reproduced. As a result, when simultaneously displaying one image on a plurality of display apparatuses, the image can be reproduced with the standardized color on any of the display apparatus. Meanwhile, when displaying one image by dividing it on a plurality of display apparatuses, the image without color gap (difference) between the plurality of display apparatuses, therefore, the image with standardized color displayed on an entire screen formed by the plurality of display apparatuses can be displayed.

Hereinafter, similar to the first embodiment, an example of the image processing apparatus utilizing the chromaticity coordinates as the reproducibility characteristic is described.

(Transmitter)

The 'transmitter' is configured to directly or indirectly connect a plurality of display apparatuses, and to transmit image information. Therefore, the transmitter of the image processing apparatus of the second embodiment is different from that of the first embodiment in terms of transmitting the image information to the plurality of connected display apparatuses.

Other configurations of the transmitter are the same as those of the image processing apparatus of the first embodiment as shown in Fig. 3A.

(Acquirer for reproducibility characteristic)

The 'acquirer for reproducibility characteristic' is configured to acquire or select the reproducibility characteristic information of the connected plurality of display apparatuses.

Therefore, the 'acquirer for reproducibility characteristic of the image processing apparatus of the second embodiment is different from that of the first embodiment in terms of acquiring or selecting the reproducibility characteristic of the respective display apparatuses.

Other configurations of the acquirer for reproducibility characteristic are the same as those of the image processing apparatus of the first embodiment as shown in Fig. 3A.

(Converter)

The 'converter' is configured to convert the image information utilizing the respective reproducibility characteristic information acquired by the acquirer for reproducibility characteristic, such that an image having color standardized between the plurality of display apparatuses is reproduced.

The term 'an image having standardized color is reproduced' means that the image is reproduced with the same color between the plurality of display apparatuses. Concretely speaking, when simultaneously displaying one image on a plurality of display apparatuses, the image can be reproduced with the standardized color on any of the display apparatuses. Meanwhile, when displaying one image by dividing it on a plurality of display apparatuses, the image without color gap (difference) between the plurality of display apparatuses, therefore, the image with standardized color displayed on an entire screen formed by the plurality of display apparatuses can be displayed. Therefore, this standardized color is the same color displayed on the ideal display apparatus.

The configuration itself for the conversion is the same as that of the 'converter' of the first embodiment, but is different from that of the first embodiment in terms of carrying out conversion utilizing the respective reproducibility characteristics of these display apparatuses, such that an image having color standardized between the plurality of display apparatuses is reproduced. This enables that according to the respective reproducibility characteristics of the plurality of display apparatuses connected by the transmission means, the image can be reproduced on any display apparatus with the accurate color intended by the person who took an image.

In addition, a configuration of the controller is the same as that of the image processing apparatus of the first embodiment as shown in Fig. 3A.

(Other Configuration: Utilizing the chromaticity coordinate value data as the reproducibility characteristic information)

Fig. 9B is another functional block diagram of the image processing apparatus of the second embodiment. In Fig. 9B, the 'image processing apparatus' 0900 is basically the same as that of the first embodiment, and the 'transmitter' 0920 comprises a plurality of 'transmission means' 0921 for transmitting the image information to a display apparatus connected directly or indirectly to the display apparatus, and the 'converter for chromaticity coordinates' 0940 comprises a plurality of 'conversion means for chromaticity coordinates' 0941 converting the chromaticity coordinates corresponding to the plurality of display apparatuses, and the 'controller for chromaticity coordinates' 0950 comprises a 'control means for chromaticity coordinates' 0951 carrying out control for causing the transmission means to simultaneously transmit the image information converted by the plurality of conversion means for chromaticity coordinates to the corresponding display apparatuses. The image processing apparatus of the second embodiment is the same as the image processing apparatus in Fig. 9A in that when simultaneously displaying one image on a plurality of display apparatuses, or when displaying one image by dividing it on a plurality of display apparatuses, the conversion of the image information and the output control are carried out, such that the image is reproduced with accurate color on any of the display apparatuses as intended by the person who took an image, and a difference is that the chromaticity coordinate value data is utilized as the reproducibility characteristic information.

(Transmission means)

The 'transmission means' is configured to directly or indirectly connect a display apparatus, and to transmit image information. The configuration itself for the transmission is the same as that of the 'transmitter' of the first embodiment, but is different from that of the first embodiment in that the transmitter comprises a plurality of transmission means. This enables simultaneous connection of the plurality of display apparatuses and simultaneous transmission of the image information to the plurality of display apparatuses.

Note that, the plurality of image information transmitted by the plurality of display apparatuses may or may not be the same. In the latter case, for example, when one image is divided and displayed on the plurality of display apparatuses, different image information is transmitted to the respective display apparatuses.

(Conversion means for chromaticity coordinates)

The 'conversion means for chromaticity coordinates' is configured to convert the chromaticity coordinates corresponding to the plurality of display apparatuses. The configuration itself for this 'conversion of chromaticity coordinates' is the same as that of the 'converter for chromaticity coordinates' of the first embodiment, but is different from that of the first embodiment in that the converter for chromaticity coordinates comprises a plurality of conversion means for chromaticity coordinates. This enables that according to the respective reproducibility characteristics of the plurality of display apparatuses connected by the transmission means, the image can be reproduced with the accurate color on any display apparatus as intended by the person who took an image. Note that, the image information as the target of the conversion to the chromaticity coordinates may or may not be the same.

(Simultaneous control means for chromaticity coordinates)

The 'simultaneous control means for chromaticity coordinates' is configured to carrying out control for causing the transmission means to simultaneously transmit the image information converted by the plurality of conversion means for chromaticity coordinates to the corresponding display apparatuses. The configuration itself for the 'control of chromaticity coordinates' is the same as that of the 'controller for chromaticity coordinates' of the first embodiment, but is different from that of the first embodiment in that the simultaneous control means for chromaticity coordinates comprises control means for simultaneously transmitting the image information to the plurality of display apparatuses. This enables simultaneous connection of the plurality of display apparatuses, and simultaneous transmission of the image information to the plurality of display apparatuses, thereby simultaneously displaying the image on the plurality of display apparatuses. Note that, the image information as the target of the transmission control may or may not be the same.

(Hardware Configuration of Second Embodiment)

Hereinafter, a hardware configuration of the image processing apparatus of the second embodiment is described. The configuration of the second embodiment is basically the same as that of the first embodiment, so that it is not indicated in the diagram, and a description is provided focusing on the differences from the first embodiment. Here, a description is provided with reference to the image processing apparatus utilizing the chromaticity coordinates data as the reproducibility characteristic information in Fig. 9B as a functional block diagram. The same applies to a hardware configuration of the image processing apparatus as shown in Fig. 9A as a functional block diagram.

At the outset, in the second embodiment, the connection of the display apparatus through the interface is carried out targeting a plurality of apparatuses. Therefore, the CPU of the image processing apparatus executes reading out of the identification information of the display apparatus with respect to each display apparatus through communication with the physically connected plurality of apparatuses, thereby uniquely identifying the respective display apparatuses and carrying out connection. The respective identification information thus read out are once stored in the main memory.

Subsequently, chromaticity coordinate conversion is carried out with respect to each display apparatus of the plurality of display apparatuses. Therefore, the CPU selects the chromaticity coordinate value data corresponding to the display apparatus connected to the transmitter from the chromaticity coordinate values stored in the main memory, and by utilizing these selected chromaticity coordinates, converts the image information, whose RGBW chromaticity coordinates has already been known, to the RGBW chromaticity coordinates corresponding to the connected display apparatus. When executing this processing as to a specific display apparatus, the CPU refers to the table for correlating the identification information of the connected display apparatus with the chromaticity coordinate value data based on the identification information of the connected display apparatus (e.g., model reference number). (Here, this table is stored with respect to each display apparatus, and is correlated with the identification information of the display apparatus, thereby identifying a table corresponding to which display apparatus.) The configuration itself for the selection is the same as that of the first embodiment.

Moreover, when the CPU executes the conversion of the image information based on the image information stored in the main memory, the correlation table for imaging apparatus and RGBW chromaticity coordinates, and the selected chromaticity coordinate value data, the conversion is executed with respect to each display apparatus of the plurality of display apparatuses along with the selection of the chromaticity coordinate value data of each display apparatus of the plurality of display apparatuses. The configuration for the conversion is the same as that of the first embodiment.

Furthermore, when the CPU controls transmission of the converted image information to the plurality of display apparatuses, the simultaneous transmission to the plurality of display apparatuses is carried out by using, for example, an internal clock function.

Other hardware configurations are the same as those of the first embodiment, so that description is omitted.

<Processing Flow of Second Embodiment>

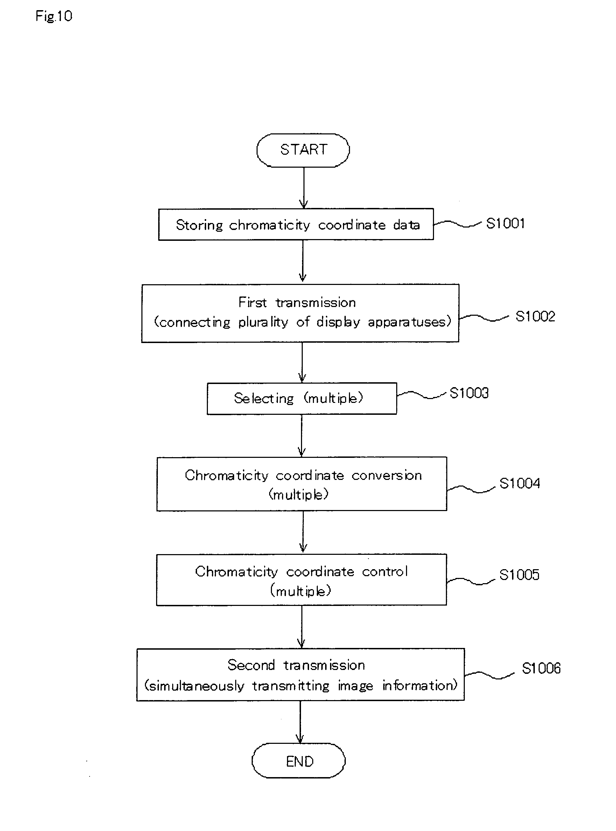

Fig. 10 is a flowchart of the image processing apparatus of the second embodiment. Here, an example of the image processing apparatus utilizing the chromaticity coordinate value data as the reproducibility characteristic information as shown in Fig. 9B is described again, and the processing flow in the image processing apparatus as shown in Fig. 9A is basically the same.

The processing flow of the second embodiment is basically the same as that of the first embodiment. In a step of first transmission S1002, the image processing apparatus of the second embodiment carries out connection of the plurality of display apparatuses. Subsequently, in a step of selecting S1003, the image processing apparatus selects chromaticity coordinate value data of the plurality of display apparatuses, and in a step of converting chromaticity coordinates S1004, the conversion to the chromaticity coordinate value corresponding to each display apparatus of the plurality of display apparatuses. Subsequently, in a step of controlling chromaticity coordinates S1005, the control of simultaneous transmission of the image information to the plurality of display apparatuses, and in a step of second transmission S1006, the simultaneous transmission of the image information is carried out.

Other portions of the flow are the same as those of the first embodiment, so that description is omitted.

<Brief Description of Effects of Second Embodiment>

According to the second embodiment, when one image is simultaneously displayed on a plurality of display apparatuses, and when displaying one image by dividing it on a plurality of display apparatuses, the image is reproduced with the accurate color on any display apparatus as intended by the person who took an image, and the image having color standardized between the plurality of display apparatuses is reproduced. As a result, when simultaneously displaying one image on a plurality of display apparatuses, the image can be reproduced with the standardized color on any of the display apparatuses. Meanwhile, when displaying one image by dividing it on a plurality of display apparatuses, the image without color gap (difference) between the plurality of display apparatuses, therefore, the image with standardized color displayed on an entire screen formed by the plurality of display apparatuses can be displayed.

**<<Third Embodiment>>**

<Concept of Third Embodiment>

An image processing apparatus of a third embodiment is connected directly or indirectly to a display apparatus, acquires or selects reproducibility characteristic information of the connected display apparatus, converts image information utilizing the acquired reproducibility characteristic information, such that accurate color image is reproduced by the display apparatus, and controls output of the converted image information. In terms of this, the image processing apparatus of the third embodiment is the same as that of the first embodiment. The image processing apparatus of the first embodiment carries out conversion to reproduce the correct color, meanwhile, the image processing apparatus of the third embodiment carries out conversion to reproduce an image with no luminance distortion.

Moreover, an image processing apparatus of the third embodiment is connected directly or indirectly to the display apparatus, comprises a storage for gamma data of the display apparatus, selects and utilizes the data corresponding to the display apparatus connected directly or indirectly to the transmitter from the stored data, converts the image information to the gamma characteristic corresponding to the display apparatus, and controls transmission of the converted image information. This enables conversion of the image information, such that image with no luminance distortion is reproduced by the display apparatus, and control of the output of the converted image information, and this aspect is that same as that of the above-mentioned image processing apparatus.

Therefore, the image processing apparatus of the first embodiment carries out the chromaticity coordinate conversion to reproduce the correct color, meanwhile, the image processing apparatus of the third embodiment carries out the gamma characteristic conversion to reproduce an image with no luminance distortion. Although there is a difference of its objective and its conversion target, the configurations for the conversion and other processings are basically the same.

<Configuration of Third Embodiment>

(Overall Configuration)

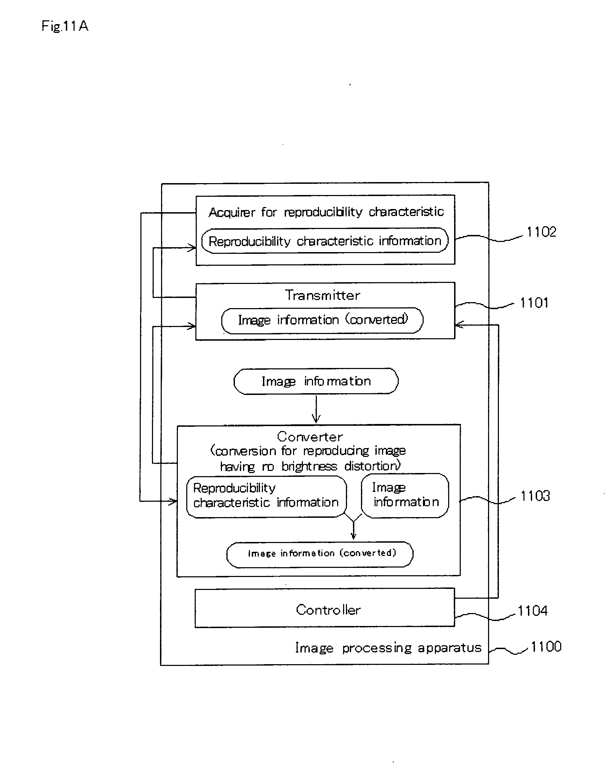

Fig. 11A is a functional block diagram of an image processing apparatus of the third embodiment. An 'image processing apparatus' 1100 of Fig. 11A comprises a 'transmitter' 1101, an 'acquirer for reproducibility characteristic' 1102, a 'converter' 1103, and a 'controller' 1104.

(Acquirer for reproducibility characteristic)

The 'acquirer for reproducibility characteristic' is configured to acquire or select reproducibility characteristic information of the connected display apparatus. Although the definition of the 'acquirer for reproducibility characteristic' of the third embodiment is the same as that of the first embodiment, the 'reproducibility characteristic' of the third embodiment is different from that of the first embodiment, and is shown by the numerical value data indicating how a specific luminance is expressed. For example, this reproducibility characteristic is indicated as the gamma characteristic.

(Converter)

The 'converter' is configured to convert image information utilizing the reproducibility characteristic information acquired by the acquirer for reproducibility characteristic, such that an image having no luminance distortion is reproduced by the display apparatus.

This is different from the image processing apparatus of the first embodiment carrying out the conversion for reproducing the image having the accurate color. Therefore, in the first embodiment, for example, the chromaticity coordinate value data is used as the reproducibility characteristic information, meanwhile, in the third embodiment, the gamma data is used as the reproducibility characteristic information. The processing of conversion of the image information is carried out in the same manner as that of the first embodiment. Note that, the configuration of the transmitter and the controller are the same as those of the first embodiment, so that descriptions are omitted.

(Other Configuration: Utilizing the chromaticity coordinate value data as the reproducibility characteristic information)

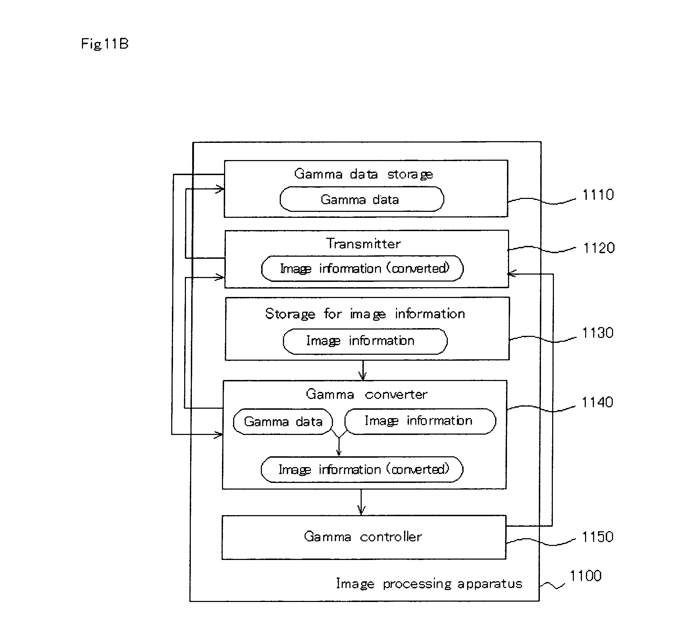

Fig. 11B is a functional block diagram of an image processing apparatus of the third embodiment. As shown in Fig. 11B, the 'image processing apparatus' 1100 comprises a 'gamma data storage' 1110, a 'transmitter' 1120, a 'storage for image information' 1130, a 'gamma converter' 1140, and a 'gamma controller' 1150. The image processing apparatus of the third embodiment is the same as the image processing apparatus in Fig. 11A in that the conversion of the image information and the output control are carried out, such that the reproduction of the image having no luminance distortion is executed, and a difference is that the gamma data is utilized as the reproducibility characteristic information.

(Gamma data storage)

The 'gamma data storage' is configured to store the gamma data, which indicates the gamma characteristic of the display apparatus. Here, the 'gamma data' is data, in which the identification information of the display apparatus and the gamma characteristic of the display apparatus are correlated similar to the above-mentioned case of chromaticity coordinate data, and, for example, is stored as a table.
In addition, the 'gamma characteristic' of the display apparatus means relation between the inputted luminance signal of the display and the actual luminance of the phosphor on the display, and further means the value indicating the gamma characteristic (generally referred to as 'gamma value'). This 'gamma characteristic' is indicated by a ratio of change in voltage corresponding value to the change in luminance of image, and is expressed by a graph in double logarithmic scale.

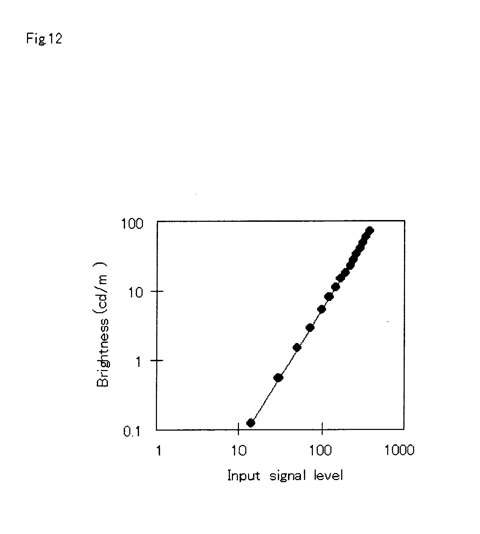

Fig. 12 is a diagram showing an example of a double logarithmic graph indicating gamma characteristic (excerpt from the non-patent reference 1, page 88). As shown in Fig. 12, the slope of the straight line expresses the gamma characteristic. In this case, when the gamma characteristic (gamma value) is 1 (i.e., the slope of the straight line is 45 degrees), an image having no luminance distortion can be acquired only by displaying it with the gamma characteristic included in the image as it is. The relation between the change in voltage corresponding value and the change in luminance of image is not always a perfectly proportional relation, and the gamma characteristic may vary depending on the type of the display. For example, when the gamma characteristic is less than 1, the bright portion is totally compressed, thereby causing white crushing, and subtle shading of white portion cannot be accurately expressed. Meanwhile, when the gamma characteristic is greater than 1, dark portion is totally compressed, thereby causing black crushing, and subtle shading of black portion cannot be accurately expressed. Therefore, in order to reproduce the accurate image as intended by the person who took the image, it is necessary to carry out correction, such that the gamma characteristic is nearly equal to 1 corresponding to the characteristic of the display apparatus (the concrete configuration for the gamma correction will be described in the after-mentioned 'gamma converter').

(Transmitter and Storage for Image information)

The 'transmitter' is configured to directly or indirectly connect the display apparatus, and transmitting image information. The 'storage for image information' is configured to store the image information, whose gamma characteristic has already been known. These are different from the 'transmitter' and the 'storage for image information' in terms of details as a processing target, and the configurations are the same, so that descriptions thereof are omitted.

(Gamma converter)

The 'gamma converter' is configured to convert the image information stored by the storage for image information to the gamma characteristic corresponding to the display apparatus by selecting and utilizing data corresponding to the display apparatus connected directly or indirectly to the transmitter from the gamma data of the display apparatus stored by the gamma data storage. The selection of the gamma data corresponding to the display apparatus can be carried out, for example, by acquiring the identification information of the display apparatus (e.g., model reference number) through the interface from the connected display apparatus, and by collating the identification information with the identification information of the display apparatus added with respect to each gamma data stored in the gamma data storage.
Subsequently, the description of a concrete configuration for converting the gamma characteristic, which has already been known, included in the image information to the chromaticity coordinates corresponding to the display apparatus by utilizing the gamma data thus selected provided.

As described, the gamma characteristic (γ) is indicated by a ratio of change in voltage corresponding value to the change in luminance of image. In the above-mentioned non-patent reference 1 (page 87), specifically, the formula (6) is established between the gamma characteristic (γ), the luminance (L), and the input signal level (V) (Note that Lb indicates the luminance to black of the minimum input signal (at 0% level)).

$$\text{(Formula 6)} \; L = aV\gamma + Lb$$

The (formula 7) is established by acquiring logarithms of both members of the (formula 6). Therefore, in the graph in double logarithmic scale, in which vertical and horizontal axes are log-converted, linear regression of data points are calculated and slope thereof is acquired, thereby acquiring the gamma characteristic.

$$\text{(Formula 7)} \; \log(L - Lb) = \gamma\log(V) + \log(a)$$

The gamma characteristic thus acquired is, for example, in the case of a television apparatus as the display apparatus, 2.2 in general, and in the case of a monitor screen of a PC, 1.8 to 2.5 in general.

When the gamma characteristic, which has already been know and is included in the image information, therefore, the gamma characteristic of the ideal display apparatus for the imaging apparatus is 1.0, in order to execute the conversion to the gamma characteristic corresponding to the selected display apparatus, the gamma correction is carried out by multiplying the inverse of the gamma characteristic of the display apparatus as a correction coefficient. For example, when the gamma characteristic of the selected display apparatus is 2.2, the correction coefficient is 0.45 (= 1/2.2)

(Gamma controller)

The 'gamma controller' is configured to cause the transmitter to transmit the converted image information. The configuration for the processing is the same as that of the 'transmitter' or the 'storage for image information' of the first embodiment excluding content of the image information as the processing target, so that a description is omitted.

(Hardware Configuration of Third Embodiment)

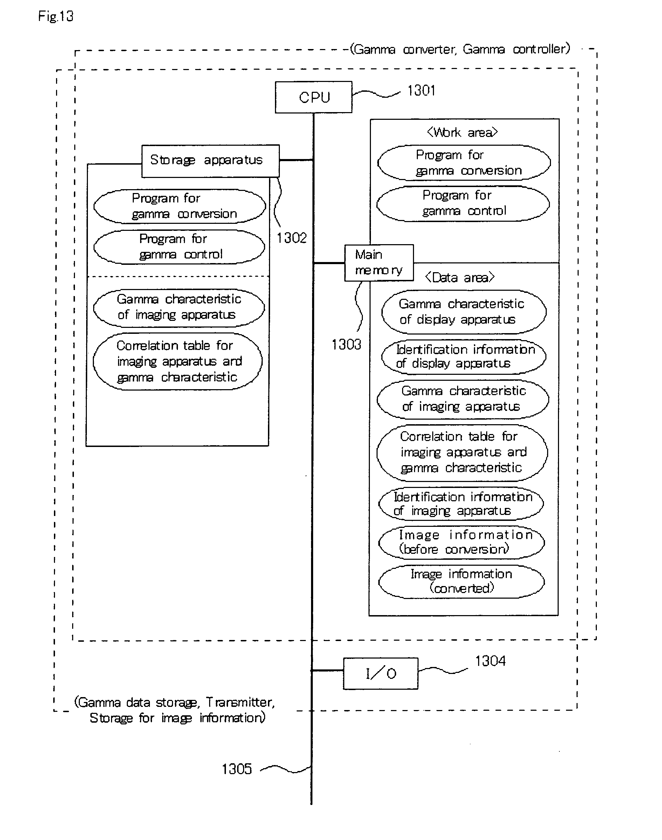

Fig. 13 is a schematic diagram showing an example of a hardware configuration of the image processing apparatus of the third embodiment. Here, an example of an image processing apparatus utilizing the gamma data as the reproducibility characteristic information as shown in Fig. 11B as a functional block diagram is described. Basically, the same applies to a hardware configuration of the image processing apparatus as shown in Fig. 11A as a functional block diagram.

As shown in Fig. 13, the storage for gamma data, the transmitter, and the storage for image information of the image processing apparatus of the third embodiment are configured by a 'CPU' 1301, a 'storage apparatus' 1302, a 'main memory' 1303, and a 'I/O' 1304. The gamma converter and the gamma controller are configured by the 'CPU', the 'storage apparatus', and the 'main memory'. These components are mutually connected by a 'system bus' 1305 as a data communication path, and carry out transmission/reception of the information. The storage stores various programs executed by the CPU. In addition, the main memory provides a work area for execution of the programs by the CPU. Moreover, a plurality of memory addresses are assigned to the main memory and the storage apparatus, and the program executed by the CPU specifies the memory address and makes an access thereto for mutually exchanging data, thereby carry out processings. In the third embodiment, a program for gamma conversion and a program for gamma control are stored in the storage apparatus, and, for example, these programs are automatically read out from the storage apparatus upon power-on, and resident in the main memory.

At the outset, the image processing apparatus has a configuration for storing the gamma data, and in a concrete configuration thereof is the same as the configuration for storing the chromaticity coordinate value data in the first embodiment. Therefore, also in this case, for example, the gamma characteristic written in an EEPROM of the display apparatus is acquired by the CPU through the interface. Moreover, the CPU may carry out the acquisition from an apparatus other than the display apparatus (e.g., a server of a company having a data base for the gamma characteristic of the display apparatus) through the interface.

Moreover, the CPU acquires the image information, whose gamma characteristic has already been known, from the imaging apparatus through the interface. The configuration for this case is the same as the configuration for acquiring the image information, whose RGBW chromaticity coordinates has already been known, described in the first embodiment.

Furthermore, the configuration, in which the CPU connects the display apparatus through the interface, is the same as that described in the first embodiment.

Subsequently, the CPU executes the program for gamma conversion to carry out the conversion of the gamma characteristic. This processing is formed by (1) the processing of selecting the gamma data corresponding to the display apparatus connected to the transmitter from the gamma data of the display apparatuses stored in the main memory, and (2) the processing of converting the image information, whose gamma data has already been known, to the gamma data corresponding to the connected display apparatus. In the selection of the processing (1), for example, the CPU refers to the table for correlating the identification information of the connected display apparatus with the gamma data based on the identification information of the connected display apparatus (e.g., model reference number) (a correlation table for image processing apparatus and gamma characteristic), thereby selecting the gamma data correlated with the identification information from the gamma data of the display apparatuses stored in the main memory. The selected gamma data is once stored in the main memory.

Subsequently, the description of a concrete configuration for the conversion (2) is provided. In this case, the CPU executes the program for gamma conversion, and carries out the conversion of the image information based on the image information stored in the main memory after the above series of processing, the correlation table for imaging apparatus and gamma characteristic, and the selected gamma data. This program for gamma conversion determines a procedure of calculation in accordance with the conversion rule based on the formula for acquiring the gamma characteristic, which is expressed by the above-mentioned formulas. In the calculation executed by the CPU in accordance with the procedure determined by the program, a coefficient is acquired, so that the value indicating gamma characteristic of the selected display apparatus is identical with the value indicating the gamma characteristic in the chromaticity coordinates of the imaging apparatus, and the coefficient is multiplied by the image information, thereby carrying out the conversion. Specifically, as described above, this coefficient is the inverse of the gamma characteristic of the ideal display apparatus for the imaging apparatus and the gamma characteristic of the connected display apparatus. The converted image information is once stored in the main memory.

Subsequently, the CPU executes the program for gamma controlling the chromaticity coordinates to control of transmission of the converted image information to the display apparatus. The configuration for this processing is the same as that of the first embodiment.

<Processing Flow of Third Embodiment>

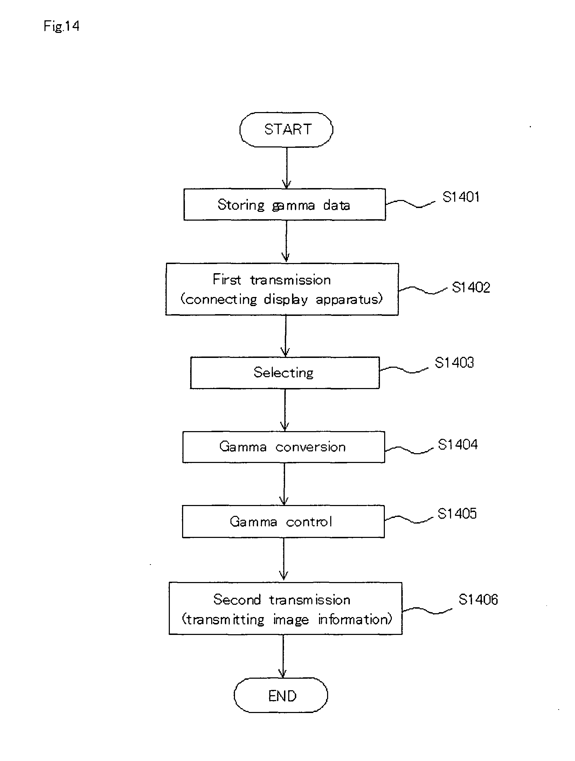

Fig. 14 is a flowchart of the image processing apparatus of the third embodiment. Here, an example of the image processing apparatus utilizing the gamma data as the reproducibility characteristic information as shown in Fig. 11B is described again, and the processing flow in the image processing apparatus as shown in Fig. 11A is basically the same.

The processing flow of the first embodiment has the following steps.

At the outset, in a step of storing gamma data S1401, the image processing apparatus more than one gamma data indicating the gamma characteristic of the display apparatus.

Subsequently, in a step of first transmission S1402, the image processing apparatus carries out connection of the display apparatus.

Subsequently, in a step of selecting S1403, the image processing apparatus selects the gamma data corresponding to the display apparatus connected by the step of first transmission S1402 from the gamma data of the display apparatus stored by the step of storing gamma data S1401.

Subsequently, in a step of gamma conversion S1404, the image processing apparatus converts the image information, whose gamma characteristic has already been known, to the gamma characteristic corresponding to the display apparatus connected by the step of first transmission S1402 by utilizing the gamma data selected by the step of selecting S1403.

Subsequently, in a step of gamma control S1405, the image processing apparatus controls transmission of the image information converted by the step of gamma conversion S 1404.

Subsequently, in a step of second transmission S1406, the image processing apparatus transmits the image information in accordance with the control by the step of gamma control S1405.

<Brief Description of Effects of Third Embodiment>

According to the present invention of the third embodiment, when carrying out the correction (conversion) of the image signal from the imaging system and recording system in order to accurately reproduce the image signal, the conversion to the value corresponding the gamma characteristic of the display apparatus is carried out based on the gamma characteristic included in the image information, which has already been known, and is a gamma characteristic of the ideal display apparatus for the person who took the image. This makes it possible to provide the image processing apparatus, which can reproduce and display an image having no luminance distortion for a viewer as an end user.

## <<Fourth Embodiment>>

<Concept of Fourth Embodiment>

An image processing apparatus of a fourth embodiment is basically the same as that of the third embodiment described with reference to Fig. 11B. However, in the image processing apparatus of the fourth embodiment, the transmitter comprises a plurality of transmission means for directly or indirectly connecting display apparatuses, and transmitting image information, the gamma converter comprises a plurality of gamma conversion means for carrying out the gamma characteristic conversion corresponding to the plurality of display apparatuses, and the gamma controller comprises a simultaneous gamma control means for carrying out control for causing the transmission means to simultaneously transmit the image information converted by the plurality of gamma conversion means to the corresponding display apparatuses.

Therefore, in the image processing apparatus of the fourth embodiment, the plurality of display apparatuses are connected, and gamma conversion is carried out corresponding to the reproducibility characteristics of the respective display apparatuses, so that it possible to reproduce and display an image having no luminance distortion as intended by the person, who took the image, for a viewer as an end user.

<Configuration of Fourth Embodiment>

(Overall Configuration)

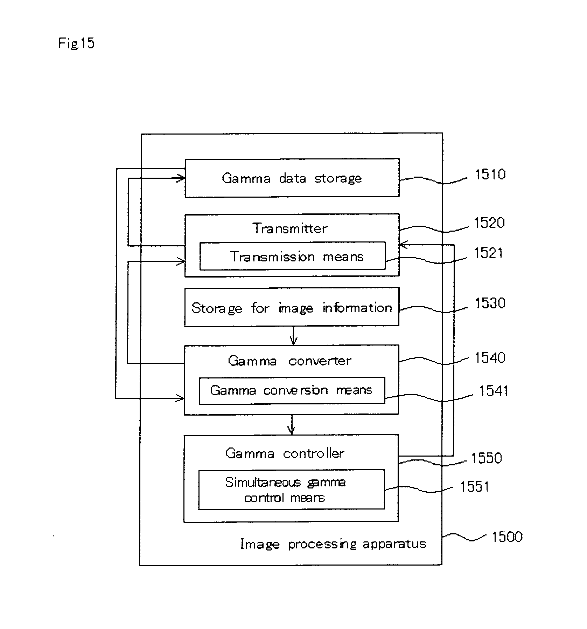

Fig. 15 is a functional block diagram of an image processing apparatus of the fourth embodiment. An 'image processing apparatus' 1500 of Fig. 15A is basically the same as the apparatus described with reference to Fig. 11B. However, the 'transmitter' 1520 comprises a plurality of 'transmission means' 1521 for directly or indirectly connecting display apparatuses, and transmitting image information, the 'gamma converter' 1540 comprises a plurality of 'gamma conversion means' 1541 for carrying out the gamma characteristic conversion corresponding to the plurality of display apparatuses, and the 'gamma controller' 1550 comprises a 'simultaneous gamma control means' 1551 for carrying out control for causing the transmission means to simultaneously transmit the image information converted by the plurality of gamma conversion means to the corresponding display apparatuses.

(Objective of Configuration of Fourth Embodiment)

Similar to the second embodiment, an objective of the configuration of the fourth embodiment is that one image is simultaneously displayed on a plurality of display apparatuses. Moreover, when displaying one image by dividing it on a plurality of display apparatuses, the image is reproduced with the accurate color on any display apparatus as intended by the person who took an image, and this is the same as the objective of the image processing apparatus of the third embodiment. However, in the image processing apparatus of the fourth embodiment, the gamma conversion corresponding to the display apparatus is carried out in order to implement the above objective, and this is different from the image processing apparatus of the second embodiment in terms of its objective and its target of the conversion. In addition, this gamma conversion is carried out, so that the image having no luminance distortion as intended by the person who took the image can be reproduced and simultaneously displayed on any of the plurality of display apparatuses, and this is different from the image processing apparatus of the third embodiment.

As a result, the image having no luminance distortion as intended by the person who took the image can be reproduced and simultaneously displayed on any of the plurality of display apparatuses.

(Hardware Configuration of Fourth Embodiment)

Hereinafter, a hardware configuration of the image processing apparatus of the fourth embodiment is described. The configuration of the fourth embodiment is basically the same as that of the third embodiment described with reference to Fig. 11B, so that it is not indicated in the diagram, and description is provided focusing on differences from the third embodiment.

At the outset, in the fourth embodiment, the connection of the display apparatus through the interface is carried out targeting a plurality of apparatuses. Therefore, the CPU of the image processing apparatus executes reading out of the identification information of the display apparatus with respect to each display apparatus through communication with the physically connected plurality of apparatuses, thereby uniquely identifying the respective display apparatuses and carrying out connection. The respective identification information thus read out are once stored in the main memory.

Subsequently, gamma characteristic conversion is carried out with respect to each display apparatus of the plurality of display apparatuses. Therefore, the CPU selects the gamma characteristic data corresponding to the display apparatus connected to the transmitter from the gamma characteristic data stored in the main memory, and by utilizing this selected gamma characteristic, converts the image information, whose gamma characteristic has already been known, to the gamma characteristic corresponding to the connected display apparatus. When executing this processing as to a specific display apparatus, the CPU refers to the table for correlating the identification information of the connected display apparatus with the gamma characteristic data based on the identification information of the connected display apparatus (e.g., model reference number). (Here, this table is stored with respect to each display apparatus, and is correlated with the identification information of the display apparatus, thereby identifying which table corresponds to which display apparatus.) The configuration itself for the selection is the same as that of the third embodiment.

Moreover, when the CPU executes the conversion of the image information based on the image information stored in the main memory, the correlation table for imaging apparatus and gamma characteristic, and the selected gamma characteristic data, the conversion is executed with respect to each display apparatus of the plurality of display apparatuses along with the selection of the gamma characteristic data of each display apparatus of the plurality of display apparatuses. The configuration for the conversion is the same as that of the third embodiment.

Furthermore, when the CPU controls transmission of the converted image information to the plurality of display apparatuses, the simultaneous transmission to the plurality of display apparatuses is carried out using, for example, an internal clock function.

Other hardware configurations are the same as those of the third embodiment, so that description is omitted.

<Processing Flow of Second Embodiment>

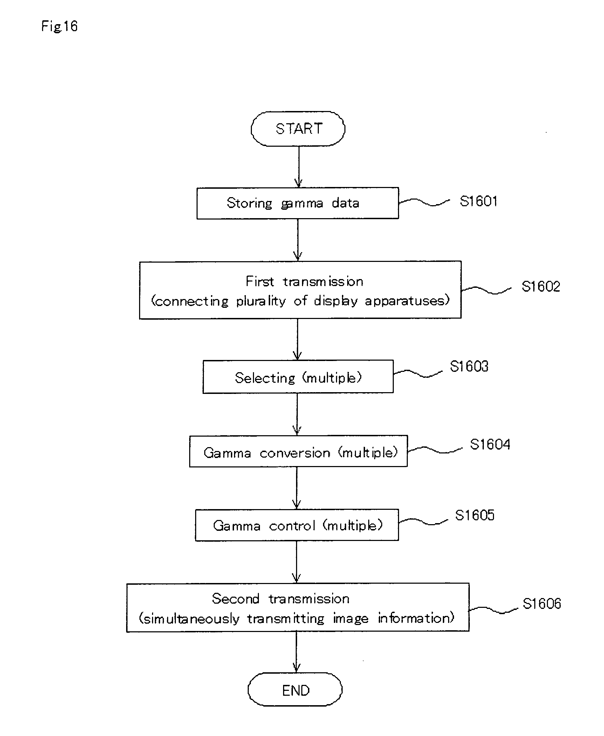

Fig. 16 is a flowchart of the image processing apparatus of the fourth embodiment. Here, the processing flow of the fourth embodiment is basically the same as that of the third embodiment described with reference to Fig. 11B.

However, in the fourth embodiment, in a step of first transmission S1602, the image processing apparatus carries out connection of the plurality of display apparatuses. Subsequently, in a step of selecting S1603, the image processing apparatus selects gamma characteristic data of the plurality of display apparatuses, and in a step of gamma conversion S1604, the conversion to the gamma characteristic corresponding to each display apparatus of the plurality of display apparatuses. Subsequently, in a step of gamma control S1605, the control of simultaneous transmission of the image information to the plurality of display apparatuses, and in a step of second transmission S1606, the simultaneous transmission of the image information is carried out.

Other portions of the flow are the same as those of the third embodiment, so that description is omitted.

<Brief Description of Effects of Fourth Embodiment>

According to the fourth embodiment, when one image is simultaneously displayed on a plurality of display apparatuses, and when displaying one image by dividing it on a plurality of display apparatuses, the image can be accurately reproduced with the accurate color on any display apparatus as intended by the person who took an image. As a result, the image having no luminance distortion can be reproduced and simultaneously displayed on any of the plurality of display apparatuses.

**<<Fifth Embodiment>>**

<Concept of Fifth Embodiment>

An image processing apparatus of the fifth embodiment is basically the same as the image processing apparatuses of the first to fourth embodiments. However, these image processing apparatuses are configured for processing the image taken by an AV apparatus such as a video camera. Meanwhile, the image processing apparatus of the fifth embodiment is configured for processing the computer graphics (hereinafter, referred to as CG) generated by a computer. Such processing of CG enables the reproduction of image of a computer game, a movie, CAD (Computer Aided Design) image etc. with accurate color on the display apparatus having reproducibility characteristic different from the computer, thereby improving user-friendliness in these fields that have been developing rapidly in recent years.

Note that the configuration for image processing executed by the image processing apparatus of the fifth embodiment is basically the same as the configurations of image processing apparatuses of the above embodiments.

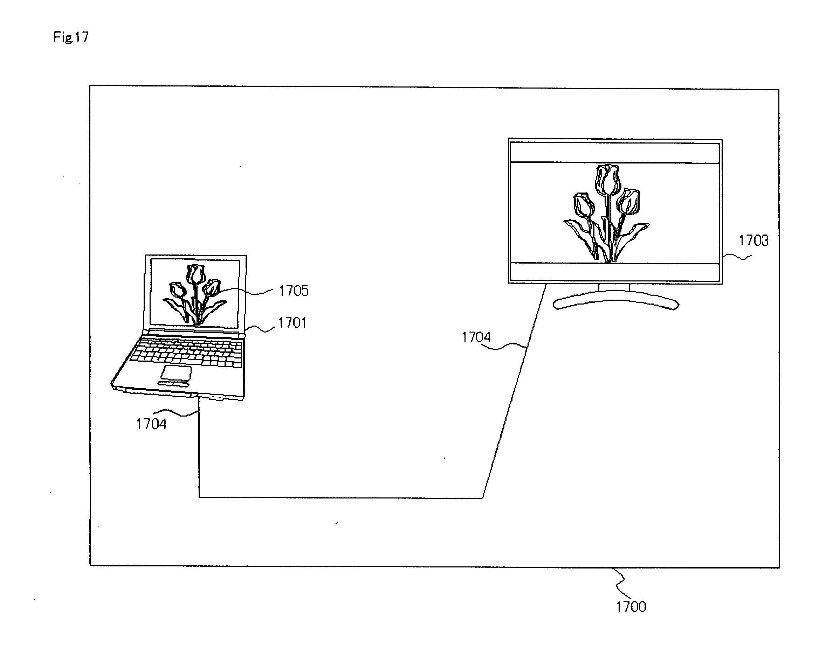

Fig. 17 is a conceptual diagram of the image processing system including the image processing apparatus of the fifth embodiment. Similar to the image processing system as shown in Fig. 1A, 1B and 1C, the image processing systems of the fifth embodiment can include all of the imaging (image generating) function, the recording function, and the display function other than the conversion (correction) and control functions for image processing, and can perform color reproduction and display processes for the image signal having image characteristic corresponding to a plurality of color reproduction areas. Note that, in the image processing apparatus of the fifth embodiment, a computer terminal is included as a component, and the image information converted by the computer terminal is transmitted to the display apparatus, or the converted image information is once stored in the computer terminal and transmitted to the display apparatus.

At the outset, as shown in Fig. 17, an image processing system 1700 comprises an image processing apparatus 1701, which doubles as an imaging apparatus, and an image processing apparatus, a display apparatus 1703 (a television in Fig. 1A). These components are connected by an interface 1704. In this case, the computer carries out the correction of the image information and transmission control thereof to the display apparatus, such that the image generated by the computer terminal is accurately reproduced and displayed as intended by the person who generated the image.

Moreover, by utilizing the image processing apparatuses 0201 and 0211 in the system of Fig. 2, therefore, the computer terminal as an apparatus, which has no imaging function and carries out conversion and transmission control of the image information taken by another apparatus, for example, on the assumption that when the computer receives the image information such as a movie through the internet, the computer simultaneously acquires the correct chromaticity coordinate as a reference of the image information from a server as an information source, the computer terminal can carry out the conversion of the image information so as to reproduce the image with accurate color according to the reproducibility characteristic of the display apparatus, and can carry out the transmission control thereof to the display apparatus.

As described above, in the fifth embodiment, the computer terminal as the image processing apparatus may generate the image by itself, and carry out the correction and transmission control thereof, or may receive the image generated by another imaging apparatus, and carry out the correction and transmission control thereof.

<Configuration of Fifth Embodiment>

(Overall Configuration)

The functional block diagram of the image processing apparatus of the fifth embodiment is the same as that shown in Figs. 3A and 3B in the above embodiments, so that description is omitted. Specifically, the acquirer for reproducibility characteristic, the storage, the transmitter, the storage for image information, the controller, and the controller for chromaticity coordinates can work by the same concrete configurations as those in the above embodiments.

Note that, as to the converter and the converter for chromaticity coordinates, there is a case that concrete conversion processing is different based on the difference of chromaticity coordinates indicating the reproducibility characteristic. Therefore, description of the concrete configuration for the conversion in the above case of such a difference occurring is provided, hereinafter. Also in this case, similar to the above embodiments, the conversion includes the conversion for reproducing the image with accurate color, the conversion for reproducing the image with color standardized between the plurality of display apparatuses, and the conversion for reproducing the image with no luminance distortion. Descriptions of the conversion for reproducing the image with accurate color and the conversion for reproducing the image with color standardized between the plurality of display apparatuses will be provided in the description of chromaticity coordinate conversion. In addition, description of the conversion for reproducing the image with no luminance distortion will be provided in the description of conversion of gamma characteristic.

(Conversion for reproducing image with accurate color)

In the chromaticity coordinate conversion by the image processing apparatus, the image information stored is converted to the chromaticity coordinates corresponding to the display apparatus connected to the transmitter by selecting and utilizing data corresponding to the display apparatus connected to the transmitter from the stored chromaticity coordinate value data. This configuration is the same as that of the image processing apparatus of the first embodiment. Note that, as described above, when drawing the image using the computer, the HSB color space is usually used. Accordingly, there is a possibility that the type of the color space corresponding to the chromaticity coordinates of the image processing apparatus and the type of the color space corresponding to the chromaticity coordinates that of the display apparatus are different. In such case, when converting the image information of CG, which has been generated and stored, to the chromaticity coordinates of the display apparatus, for example, the image processing apparatus of the fifth embodiment executes the conversion from the HSB chromaticity coordinates to the RGBW chromaticity coordinates, and after that, similar to the first embodiment, the conversion of the RGBW chromaticity coordinates is executed.

The HSB chromaticity coordinates is formed by three elements of Hue, Saturation, and Brightness. The 'H' is generally expressed by a circle area, and the 'S' and 'B' are generally expressed by a triangle area (Note that, the HSB color space is also called HSV color space).

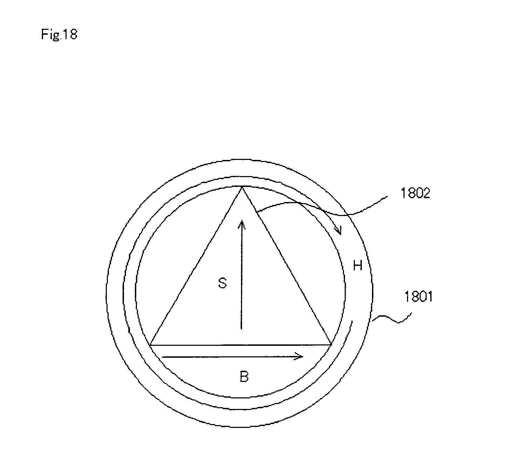

Fig. 18 is a diagram showing an example of a color area in HSB color space. In Fig. 18, the 'H' is expressed by angular coordinates at 0 - 360 degrees in the outer circle area 1801. The redness becomes strongest at 0 degree (in three o'clock direction), and the greenness becomes strongest at 120 degrees, and the blueness becomes strongest at 240 degrees.

In addition, in Fig. 18, the 'S' is expressed in the inner triangle area 1802 on the horizontal axis at 0 - 100 %. As closing to 0%, the saturation decreases (grayish color), and as closing to 100%, the saturation increases.

Moreover, in Fig. 18, the 'B' is expressed in the inner triangle area on the vertical axis at 0 - 100 %. As closing to 0%, the brightness decreases, and as closing to 100%, the brightness increases.

When the person who generates the CG generates the image by the computer using this HSB color space, generally, the 'H' value is selected at the angular coordinate position in the circle area, subsequently, the 'S' and 'B' values are selected at coordinate positions on the horizontal and vertical axes in the triangle area. Thus, the person, who generates the image, can unambiguously express a specific color in the HSB color space by numerical values.

Subsequently, for example, the computer terminal as the image processing apparatus converts the HSB chromaticity coordinates thus generated to the chromaticity coordinates of the display apparatus. Here, when the chromaticity coordinates of the display apparatus corresponds to the color space, whose type is different from the chromaticity coordinates of the computer terminal, for example, when the chromaticity coordinates of the display apparatus corresponds to the RGB color space, it is necessary to carry out conversion from the HSB chromaticity coordinates to the RGBW chromaticity coordinates. In addition, when the image information is transmitted from the imaging apparatus to the display apparatus through the computer terminal, and is displayed, it can be necessary to once carry out conversion from the RGBW chromaticity coordinates to the HSB chromaticity coordinates. In these cases, by the mutual conversion between the HSB chromaticity coordinates and the RGBW chromaticity coordinates, it is possible to convert the image information, so that the image with accurate color is reproduced by the display apparatus.

Concretely speaking, for example, the image processing apparatus preliminarily stores a table for determining the conversion formula for the mutual conversion between the HSB chromaticity coordinates and the RGBW chromaticity coordinates (table for HSB/RGBW chromaticity coordinate conversion) in order to carry out the conversion from the HSB chromaticity coordinates to the RGBW chromaticity coordinates, and the image processing apparatus may carry out the conversion using the conversion formula determined by this table.

After that, the image information converted to the RGBW chromaticity coordinates is converted to the chromaticity coordinates of the display apparatus by the same processing as that of the first embodiment. Therefore, for example, the image processing apparatus stores the table for HSB/RGBW chromaticity coordinate conversion, and reads out the data of the display apparatus selected from the stored chromaticity coordinate data of the display apparatus, thereby executing the processing based on the table and data.

As a result processing, the transmission control of the converted image information to the display apparatus is carried out, thereby enabling accurate reproduction by the display apparatus.

This mutual conversion between the HSB chromaticity coordinates and the RGBW chromaticity coordinates can be executed by using the formula as common knowledge described in the non-patent reference 2 'Wikipedia HSV color space' (http://ja.wikipedia.org/wiki/HSB).

Note that, in the above, the case of mutual conversion between the HSB color space and the RGBW color space has been described, and as to the other color space, for example, mutual conversion between the YCbCr color space and the RGB color space can be executed by using the formula as common knowledge.

(Conversion for reproducing image with standardized color)

The image processing apparatus of the fifth embodiment includes conversion for reproducing the image with color standardized between the plurality of display apparatuses. In this case, the 'converter' converts the CG utilizing the reproducibility characteristic of the respective display apparatuses. The configuration for this conversion is the same as that of the converter of the second embodiment. In this case, for example, when the chromaticity coordinates of the computer terminal generating the CG is the HSB chromaticity coordinates, the above conversion method may be used for the conversion. Meanwhile, when the chromaticity coordinates of the display apparatus is different from that of the computer terminal and is the RGB chromaticity coordinates, the conversion from HSB to RGB may be executed using the above conversion method. Moreover, when both of the television apparatus using the RGB chromaticity coordinates and the computer terminal using the HSB chromaticity coordinates exist in the plurality of display apparatuses, a combination of the above conversion methods may be used for the conversion. Therefore, the conversion corresponding to the reproducibility characteristics of the respective display apparatuses, thereby reproducing the image with color standardized between the display apparatuses.

According to such image processing apparatus, for example, it is possible to display the CG of a head-to-head type computer game using the plurality of display apparatuses as the image with color standardized between the plurality of display apparatuses.

(Conversion for reproducing image with no luminance distortion)

The image processing apparatus of the fifth embodiment includes the configuration for the conversion for reproducing the image with no luminance distortion. The configuration for this conversion is the same as that of the converter of the third embodiment.

As described above, the gamma characteristic indicating the reproducibility characteristic relating to luminance is different depending on the type of display apparatus, and for example, in the case of a television apparatus as the display apparatus, the gamma characteristic (gamma value) is 2.2 in general, and in the case of a monitor screen of a PC, the gamma characteristic is 1.8 to 2.5 in general. Therefore, when displaying the CG generated for being displayed on the monitor screen of the PC on the television without conversion, luminance distortion is caused. In order to reproduce the generated CG on the television without luminance distortion, the converter carries out correction (conversion) of the image information. The concrete correction method is the same as that described in the third embodiment, and the correction may be carried out using an inverse of the gamma characteristic of the display apparatus as the correction coefficient.

According to such image processing apparatus, for example, it is possible to reproduce the CG of the computer game as the image with no luminance distortion on a large screen television etc.

(Hardware Configuration of Fifth Embodiment)

Subsequently, the hardware configuration of the image processing apparatus of the fifth embodiment is described. The hardware configuration of the image processing apparatus of the fifth embodiment is the same as that of the first embodiment. In addition, as to the processing executed by the respective programs utilizing the hardware configuration, for example, when converting the CG generated by a computer terminal using the HSB chromaticity coordinates to the HSB chromaticity coordinates indicating the reproducibility characteristic of another computer terminal as the display apparatus, and controlling the transmission thereof, the same processing described in the case of RGBW chromaticity coordinates in the first embodiment may be carried out.

However, for example, when the chromaticity coordinates of the computer terminal corresponds to the HSB color space, and the chromaticity coordinates of the display apparatus corresponds to the RGB color space, therefore, when the chromaticity coordinates of the computer terminal used for generation of the CG and the chromaticity coordinates of the display apparatus correspond to different type color spaces, it is necessary to carry out conversion between the chromaticity coordinates corresponding to different type color spaces. Hereinafter, the hardware configuration for conversion between the different chromaticity coordinates by the image processing apparatus, and the processing of the program using the hardware configuration are described.

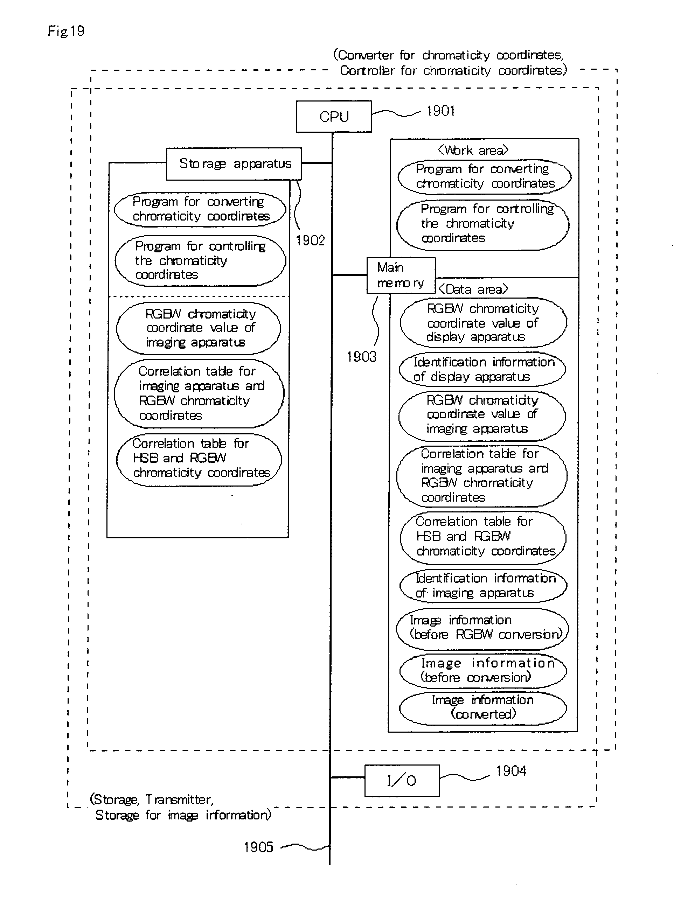

Fig. 19 is a schematic diagram of a hardware configuration of the image processing apparatus of the fifth embodiment. Here, the case where the program for chromaticity coordinate conversion executes processing including the conversion from the HSB chromaticity coordinates to the RGB chromaticity coordinates as the conversion between the different chromaticity coordinates is described.

The hardware configuration of the image processing apparatus of the fifth embodiment is the same as that of Fig. 7. In addition, as to the processing carried out by the respective programs using such hardware configuration, the storage of chromaticity coordinates data of the display apparatus, acquisition of the image information, connection of the display apparatus, and transmission control of the converted image information are basically the same as the processings described with reference to Fig. 7 excluding a part of information content as a processing target. Therefore, descriptions thereof are omitted, and the processing of conversion in accordance with the procedure determined by the program for chromaticity coordinates conversion is described, hereinafter.

In this case, at the outset, the CPU selects the chromaticity coordinate value data corresponding to the display apparatus connected to the transmitter from the chromaticity coordinate values stored in the main memory in accordance with the procedure determined by the program. Similar to the first embodiment, this selection is carried out, for example, by using the identification information of the connected display apparatus and the table for correlation between the identification information of the display apparatus and the chromaticity coordinate value data. In the fifth embodiment, the selected chromaticity coordinate value data of the display apparatus is data expressed by the RGBW chromaticity coordinates.

Subsequently, the CPU executes conversion of the chromaticity coordinates of the image information, which has been stored in the main memory by the processing described in the first embodiment (in Fig. 19, indicated as 'before RGBW conversion'). In the fifth embodiment, the chromaticity coordinates of the image information is the HSB chromaticity coordinates, and is determined as different chromaticity coordinates in comparison with the RGBW chromaticity coordinates of the display apparatus selected by the above processing, thereby executing the conversion to the RGBW chromaticity coordinates. For this processing, for example, the table for HSB/RGBW chromaticity coordinate conversion is preliminarily stored in the storage apparatus in order to execute the conversion from the HSB chromaticity coordinates to the RGBW chromaticity coordinates, and the CPU reads out this table on the main memory, thereby executing the conversion in accordance with this table.

The image information thus converted to the RGBW chromaticity coordinates (in Fig. 19, indicated as 'Image information (before conversion)') is further converted to the chromaticity coordinates of the display apparatus by the same procedure as that of the first embodiment. This processing may be executed by the same procedure as that of the first embodiment, therefore, by the procedure based on the correlation table for imaging apparatus and RGBW chromaticity coordinates and the selected chromaticity coordinate value data of the display apparatus.

<Processing Flow of Fifth Embodiment>

The processing flow in the image processing apparatus of the fifth embodiment is basically the same as that of the first embodiment. However, as described above, when the chromaticity coordinates of the computer terminal used for generation of the CG and the chromaticity coordinates of the display apparatus correspond to different type color spaces, the processing flow is different from that of the first embodiment. Therefore, the processing flow in such case is described.

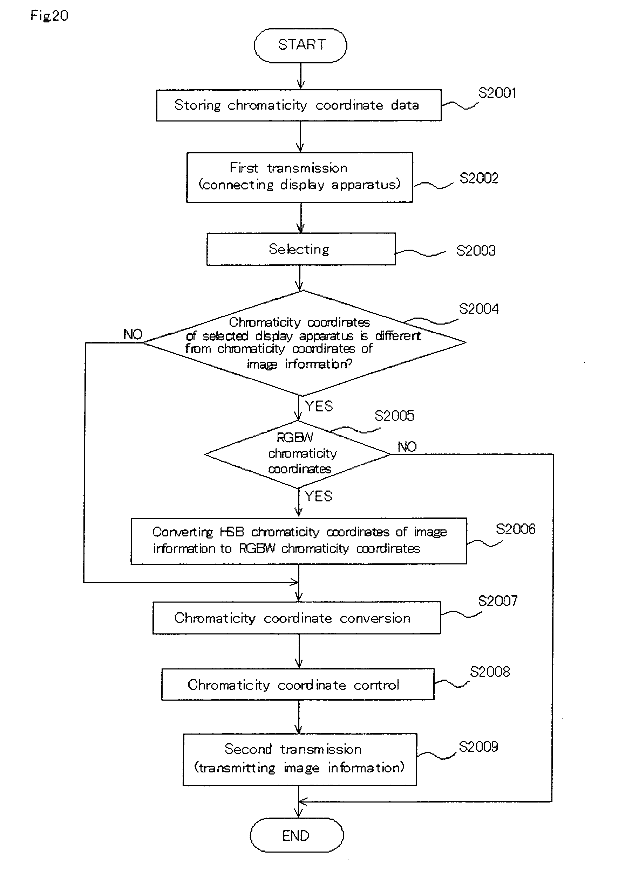

Fig. 20 is a flowchart of the image processing apparatus of the fifth embodiment, and shows the above case including the conversion between the chromaticity coordinates corresponding to different type color spaces. Note that the image processing apparatus of the fifth embodiment is the computer terminal, and carries out the conversion of the CG generated using the HSB chromaticity coordinates according to the reproducibility characteristic of the display apparatus, and the transmission control.

Steps S2001 to S2003 of the processings shown in Fig. 20 are the same as the steps S0801 to S0803 of the processings shown in Fig. 8 in the first embodiment, so that descriptions are omitted.

Subsequently, in a step of determining S2004, the image processing apparatus determines whether the selected chromaticity coordinates of the display apparatus is different from the chromaticity coordinates used for the chromaticity coordinate value data of the image information. If a determination result indicates that it is different, in a step of determining S2005, it is determined whether the chromaticity coordinates of the display apparatus is the RGB chromaticity coordinates.

As a result, if the determination result indicates that it is the RGB chromaticity coordinates, the image processing apparatus carries out conversion from the HSB chromaticity coordinates of the image information to the RGB chromaticity coordinates (step S2006). This conversion can be executed, for example, by utilizing the table for HSB/RGBW chromaticity coordinate conversion, which has preliminarily been stored by the image processing apparatus.

After that, the image information thus converted to the RGBW chromaticity coordinates is converted and transmitted through the same processing flow of the first embodiment. Therefore, Steps S2007 to S2009 in Fig. 20 are the same as the steps S0804 to S0806 in Fig. 8.

<Brief Description of Effects of Fifth Embodiment>

According to such image processing apparatus, it is possible to reproduce the image of a computer game, a movie, CAD image etc., which are generated or stored by the computer, with accurate color on the display apparatus having reproducibility characteristic different from that of the computer. Moreover, in the head-to-head type computer game using the plurality of display apparatuses, it is possible to display the image with color standardized between the plurality of display apparatuses.

**Claims**

**1.** An image processing apparatus, comprising:

a transmitter for directly or indirectly connecting to a display apparatus, and transmitting image information;
an acquirer for reproducibility characteristic acquiring or selecting reproducibility characteristic information of the connected display apparatus;
a converter for converting image information utilizing the reproducibility characteristic information acquired by the acquirer for reproducibility characteristic, such that accurate color image is reproduced by said display apparatus; and
a controller for causing the transmitter to transmit the converted image information.

**2.** An image processing apparatus, comprising:

a transmitter for directly or indirectly connecting to a plurality of display apparatus, and transmitting image information;

an acquirer for reproducibility characteristic acquiring or selecting the respective reproducibility characteristic information of the connected plurality of display apparatuses;

a converter for converting the image information utilizing the respective reproducibility characteristic information acquired by the acquirer for reproducibility characteristic, such that an image having color standardized between said plurality of display apparatuses is reproduced; and

a controller for causing the transmitter to transmit the converted image information.

3. An image processing apparatus, comprising:

a transmitter for directly or indirectly connecting to a display apparatus, and transmitting image information;

an acquirer for reproducibility characteristic acquiring or selecting reproducibility characteristic information of the connected display apparatus;

a converter for converting the image information utilizing the reproducibility characteristic information acquired by the acquirer for reproducibility characteristic, such that an image having no luminance distortion is reproduced by said display apparatus; and

a controller for causing the transmitter to transmit the converted image information.

4. An image processing apparatus, comprising:

a storage for chromaticity coordinates storing chromaticity coordinate value data indicating a chromaticity coordinates of a display apparatus;

a transmitter for directly or indirectly connecting to a display apparatus, and transmitting image information;

a storage for image information storing the image information whose chromaticity coordinate value has already been known;

a converter for chromaticity coordinates converting the image information stored by the storage for image information to the chromaticity coordinates corresponding to said display apparatus by selecting and utilizing data corresponding to the display apparatus connected directly or indirectly to the transmitter from the chromaticity coordinate value data of the display apparatus stored in the storage; and

a controller for chromaticity coordinates carrying out control for causing the transmitter to transmit the converted image information.

5. The image processing apparatus according to Claim 4,
wherein the transmitter comprises
a plurality of transmission means directly or indirectly connecting to the display apparatuses, and transmitting the image information,
the converter for chromaticity coordinates comprises
a plurality of conversion means for chromaticity coordinates carrying out the chromaticity coordinate conversion corresponding to the plurality of display apparatuses, and
the controller for chromaticity coordinates comprises
a simultaneous control means for chromaticity coordinates carrying out control for causing the transmission means to simultaneously transmit the image information converted by the plurality of conversion means for chromaticity coordinates to the corresponding display apparatuses.

6. An image processing apparatus, comprising:

a gamma data storage for storing gamma data, which indicates gamma characteristic of a display apparatus;
a transmitter for directly or indirectly connecting to the display apparatus, and transmitting image information;
a storage for image information storing the image information whose gamma characteristic has already been known;
a gamma converter converting the image information stored by the storage for image information to the gamma characteristic corresponding to said display apparatus by selecting and utilizing data corresponding to the display apparatus connected directly or indirectly to the transmitter from the gamma data of the display apparatus stored by the gamma data storage; and
a gamma controller for causing the transmitter to transmit the converted image information.

7. The image processing apparatus according to Claim 6,

wherein the transmitter comprises
a plurality of transmission means for directly or indirectly connecting to the display apparatus, and transmitting the image information,
the gamma converter comprises
a plurality of gamma conversion means for carrying out the gamma characteristic conversion corresponding to the plurality of display apparatuses, and
the gamma controller comprises
a simultaneous gamma control means carrying out control for causing the transmission means to simultaneously transmit the image information converted by the plurality of gamma conversion means to the corresponding display apparatuses.

8.  A method of image processing, comprising the steps of:

storing chromaticity coordinate value data indicating a chromaticity coordinates of a display apparatus;
first transmission to directly or indirectly connect the display apparatus;
selecting data corresponding to the display apparatus connected by the step of first transmission from the chromaticity coordinate value data of the display apparatuses stored by the step of storing chromaticity coordinate value data;
converting the image information whose chromaticity coordinates has already been known to the chromaticity coordinates corresponding to the display apparatus connected by the step of first transmission by utilizing the chromaticity coordinate value data selected by the step of selecting;
controlling transmission of the image information converted by the step of converting; and
second transmission to transmit the image information in accordance with the control by the step of controlling.

9.  The method of image processing according to Claim **8,**
wherein the transmission by the step of second transmission is to directly or indirectly connect a plurality of display apparatuses, and to transmit the image information thereto,
the conversion by the step of converting is to carry out the chromaticity coordinate conversion corresponding to the plurality of display apparatuses, and
the control by the step of controlling is to carry out control, such that the image information corresponding to the plurality of display apparatuses converted by said step of converting are simultaneously transmitted to the corresponding display apparatuses.

10. A method of image processing, comprising the steps of:

storing gamma data indicating gamma characteristic of a display apparatus;
first transmission to directly or indirectly connect a display apparatus;
selecting data corresponding to the display apparatus connected by the step of first transmission from the gamma data of the display apparatuses stored by the step of storing gamma data;
converting the image information, whose gamma characteristic has already been known, to the gamma characteristic corresponding to the display apparatus connected by the step of first transmission by utilizing the gamma data selected by the step of selecting;
controlling transmission of the image information converted by the step of converting; and
second transmission to transmit the image information in accordance with the control by the step of controlling.

11. The method of image processing according to Claim 10,
wherein the transmission by the step of second transmission is to directly or indirectly connect a plurality of display apparatuses, and to transmit the image information thereto,
the conversion by the step of gamma converting is to carry out the gamma characteristic conversion corresponding to the plurality of display apparatuses, and
the control by the step of controlling is to carry out control, such that the image information corresponding to the plurality of display apparatuses converted by said step of converting are simultaneously transmitted to the corresponding display apparatuses.

12. An image processing program for causing a computer to operate:

a transmitter for directly or indirectly connecting to a display apparatus, and transmitting image information;
an acquirer for reproducibility characteristic acquiring or selecting reproducibility characteristic information of the connected display apparatus;
a converter for converting the image information utilizing the reproducibility characteristic information acquired by the acquirer for reproducibility characteristic, such that accurate color image is reproduced by said display apparatus; and
a controller for causing the transmitter to transmit the converted image information.

13. An image processing program for causing a computer to operate:

a transmitter for directly or indirectly connecting to a plurality of display apparatuses, and transmitting image information;
a converter for converting the image information utilizing the respective reproducibility characteristic information of the connected plurality of display apparatuses, such that an image having color standardized between said plurality of display apparatuses is reproduced; and
a controller for causing the transmitter to transmit the converted image information.

14. An image processing program for causing a computer to operate:

a transmitter for directly or indirectly connecting to a display apparatus, and transmitting image information;
an acquirer for reproducibility characteristic acquiring or selecting reproducibility characteristic information of the connected display apparatus;
a converter for converting the image information utilizing the reproducibility characteristic information acquired by the acquirer for reproducibility characteristic, such that an image having no luminance distortion is reproduced by said display apparatus; and
a controller for causing the transmitter to transmit the converted image information.

Fig 1A

Fig.1B

EP 2 148 515 A1

33

Fig1C

EP 2 148 515 A1

Fig.2

(a)

(b)

Fig.3A

```
┌─────────────────────────────────────────────────────┐
│   ┌─────────────────────────────────────────────┐    │
│   │  Acquirer for reproducibility characteristic │    │
│   │  ╭─────────────────────────────────────────╮ │    │
│   │  │ Reproducibility characteristic information│ │────── 0302
│   │  ╰─────────────────────────────────────────╯ │    │
│   └─────────────────────────────────────────────┘    │
│                                                       │
│   ┌─────────────────────────────────────────────┐    │
│   │                Transmitter                   │────── 0301
│   │  ╭─────────────────────────────────────────╮ │    │
│   │  │  Image information (converted)           │ │    │
│   │  ╰─────────────────────────────────────────╯ │    │
│   └─────────────────────────────────────────────┘    │
│                                                       │
│           ╭──────────────────────────╮               │
│           │   Image information       │               │
│           ╰──────────────────────────╯               │
│                        ↓                              │
│   ┌─────────────────────────────────────────────┐    │
│   │                 Converter                    │    │
│   │   (conversion for reproducing image          │    │
│   │        having accurate color)                │    │
│   │  ╭─────────────────────╮  ╭───────────╮      │────── 0303
│   │  │ Reproducibility     │  │  Image    │      │    │
│   │  │ characteristic      │  │ information│      │    │
│   │  │ information         │  ╰───────────╯      │    │
│   │  ╰─────────────────────╯        ↓            │    │
│   │      ╭───────────────────────────────╮      │    │
│   │      │ Image information (converted)  │      │    │
│   │      ╰───────────────────────────────╯      │    │
│   └─────────────────────────────────────────────┘    │
│                                                       │
│   ┌─────────────────────────────────────────────┐    │
│   │                Controller                    │────── 0304
│   └─────────────────────────────────────────────┘    │
│                    Image processing apparatus │────── 0300
└─────────────────────────────────────────────────────┘
```

Fig.3B

Storage

Chromaticity coordinate value data

0310

Transmitter

Image information (converted)

0320

Storage for image information

Image information

0330

Converter for chromaticity coordinates

Chromaticity coordinate value data

Image information

Image information (converted)

0340

Controller for chromaticity coordinates

0350

Image processing apparatus

0300

Fig.4

Fig.5

Fig6

(a)

| Identification information of imaging apparatus 0601 | Chromaticity coordinate value 0602 | Intensity index of R 0603 | Intensity index of G 0604 | Intensity index of B 0605 |
|---|---|---|---|---|
| VC-10A | 01038976 | 0 | 128 | 0 |
| | ... | ... | ... | ... |

(b)

| Identification information of display apparatus 0606 | Chromaticity coordinate value 0607 | Intensity index of R 0608 | Intensity index of G 0609 | Intensity index of B 0610 |
|---|---|---|---|---|
| LC-37G | 01039000 | 0 | 128 | 0 |
| | ... | ... | ... | ... |

Fig.7

(Converter for chromaticity coordinates,
Controller for chromaticity coordinates)

CPU — 0701

Storage apparatus

Program for converting
chromaticity coordinates

Program for controlling
the chromaticity
coordinates

0702

RGBW chromaticity
coordinate value of
imaging apparatus

Correlation table for
imaging apparatus and
RGBW chromaticity
coordinates

<Work area>

Program for converting
chromaticity coordinates

Program for controlling
the chromaticity
coordinates

Main
memory    <Data area>

0703

RGBW chromaticity
coordinate value of
display apparatus

Identification information
of display apparatus

RGBW chromaticity
coordinate value of
imaging apparatus

Correlation table for
imaging apparatus and
RGBW chromaticity
coordinates

Identification information
of imaging apparatus

Image information
(before conversion)

Image information
(converted)

I/O — 0704

(Storage, Transmitter,
Storage for image information)

0705

Fig.8

```
                        ┌─────────────┐
                        │   START     │
                        └──────┬──────┘
                               │
                               ▼
        ┌──────────────────────────────────────┐
        │   Storing chromaticity coordinate data│────  S0801
        └──────────────────┬───────────────────┘
                           │
                           ▼
        ┌──────────────────────────────────────┐
        │         First transmission           │────  S0802
        │      (connecting display apparatus)   │
        └──────────────────┬───────────────────┘
                           │
                           ▼
            ┌─────────────────────────┐
            │        Selecting         │────  S0803
            └────────────┬────────────┘
                         │
                         ▼
        ┌──────────────────────────────────────┐
        │    Chromaticity coordinate conversion │────  S0804
        └──────────────────┬───────────────────┘
                           │
                           ▼
        ┌──────────────────────────────────────┐
        │    Chromaticity coordinate control    │────  S0805
        └──────────────────┬───────────────────┘
                           │
                           ▼
        ┌──────────────────────────────────────┐
        │        Second transmission           │────  S0806
        │     (transmitting image information)  │
        └──────────────────┬───────────────────┘
                           │
                           ▼
                    ┌─────────────┐
                    │    END      │
                    └─────────────┘
```

Fig.9A

Fig9B

Storage

Chromaticity coordinate value data                    0910

Transmitter

Transmission means (plural)                           0920

Image information (converted)                         0921

Storage for image information                        0930

Image information

Converter for chromaticity coordinates

Converter for chromaticity coordinates (plural)      0940

Chromaticity
coordinate value data         Image
                              information          0941

Image information (converted)

Controller for chromaticity coordinates              0950

Simultaneous control means for
chromaticity coordinates                             0951

Image processing apparatus                           0900

Fig.10

```
                    ┌─────────────┐
                    │    START    │
                    └─────────────┘
                           │
                           ▼
        ┌──────────────────────────────────┐
        │  Storing chromaticity coordinate data │ ─── S1001
        └──────────────────────────────────┘
                           │
                           ▼
        ┌──────────────────────────────────────────┐
        │           First transmission              │ ─── S1002
        │ (connecting plurality of display apparatuses) │
        └──────────────────────────────────────────┘
                           │
                           ▼
           ┌──────────────────────────┐
           │    Selecting (multiple)   │ ─── S1003
           └──────────────────────────┘
                           │
                           ▼
        ┌──────────────────────────────────┐
        │  Chromaticity coordinate conversion │ ─── S1004
        │            (multiple)               │
        └──────────────────────────────────┘
                           │
                           ▼
        ┌──────────────────────────────────┐
        │   Chromaticity coordinate control  │ ─── S1005
        │            (multiple)               │
        └──────────────────────────────────┘
                           │
                           ▼
        ┌──────────────────────────────────────────┐
        │            Second transmission             │ ─── S1006
        │ (simultaneously transmitting image information) │
        └──────────────────────────────────────────┘
                           │
                           ▼
                    ┌─────────────┐
                    │     END     │
                    └─────────────┘
```

Fig.11A

Acquirer for reproducibility characteristic

Reproducibility characteristic information — 1102

Transmitter

Image information (converted) — 1101

Image information

Converter
(conversion for reproducing image
having no brightness distortion)

Reproducibility
characteristic information    Image
information — 1103

Image information (converted)

Controller — 1104

Image processing apparatus — 1100

Fig 11B

```
┌─────────────────────────────────────────────┐
│  ┌───────────────────────────────────────┐   │
│  │        Gamma  data  storage           │~~~ 1110
│  │    (    Gamma  data    )              │   │
│  └───────────────────────────────────────┘   │
│  ┌───────────────────────────────────────┐   │
│  │           Transmitter                 │~~~ 1120
│  │ ( Image information (converted) )     │   │
│  └───────────────────────────────────────┘   │
│  ┌───────────────────────────────────────┐   │
│  │     Storage  for  image information   │   │
│  │      (   Image information  )         │~~~ 1130
│  └───────────────────────────────────────┘   │
│                      ↓                        │
│  ┌───────────────────────────────────────┐   │
│  │         Gamma  converter              │~~~ 1140
│  │ ( Gamma data )  ( Image information )  │   │
│  │            ↓                           │   │
│  │   ( Image information (converted) )   │   │
│  └───────────────────────────────────────┘   │
│                      ↓                        │
│  ┌───────────────────────────────────────┐   │
│  │         Gamma  controller             │~~~ 1150
│  └───────────────────────────────────────┘   │
│              Image  processing apparatus  ~~ 1100
└─────────────────────────────────────────────┘
```

Fig 12

Fig.13

(Gamma converter, Gamma controller)

CPU — 1301

Storage apparatus

- Program for gamma conversion
- Program for gamma control

1302

- Gamma characteristic of imaging apparatus
- Correlation table for imaging apparatus and gamma characteristic

<Work area>
- Program for gamma conversion
- Program for gamma control

Main memory

1303

<Data area>
- Gamma characteristic of display apparatus
- Identification information of display apparatus
- Gamma characteristic of imaging apparatus
- Correlation table for imaging apparatus and gamma characteristic
- Identification information of imaging apparatus
- Image information (before conversion)
- Image information (converted)

I/O — 1304

(Gamma data storage, Transmitter, Storage for image information)

1305

Fig.14

```
            ┌──────────────┐
            │    START     │
            └──────┬───────┘
                   │
                   ▼
         ┌─────────────────────┐
         │  Storing gamma data  │────── S1401
         └──────────┬──────────┘
                    │
                    ▼
     ┌──────────────────────────────┐
     │      First transmission       │
     │  (connecting display apparatus)│──── S1402
     └───────────────┬──────────────┘
                     │
                     ▼
         ┌─────────────────────┐
         │     Selecting        │────── S1403
         └──────────┬──────────┘
                    │
                    ▼
         ┌─────────────────────┐
         │   Gamma conversion   │────── S1404
         └──────────┬──────────┘
                    │
                    ▼
         ┌─────────────────────┐
         │    Gamma control     │────── S1405
         └──────────┬──────────┘
                    │
                    ▼
     ┌──────────────────────────────┐
     │      Second transmission      │
     │ (transmitting image information)│──── S1406
     └───────────────┬──────────────┘
                     │
                     ▼
            ┌──────────────┐
            │     END      │
            └──────────────┘
```

Fig.15

Gamma data storage — 1510

Transmitter — 1520

Transmission means — 1521

Storage for image information — 1530

Gamma converter — 1540

Gamma conversion means — 1541

Gamma controller — 1550

Simultaneous gamma control means — 1551

Image processing apparatus — 1500

Fig16

```
                        ┌─────────────┐
                        │    START    │
                        └──────┬──────┘
                               │
                               ▼
              ┌────────────────────────────────┐
              │      Storing gamma data        │ ─── S1601
              └────────────────┬───────────────┘
                               │
                               ▼
        ┌───────────────────────────────────────────┐
        │           First transmission              │ ─── S1602
        │ (connecting plurality of display apparatuses) │
        └──────────────────────┬────────────────────┘
                               │
                               ▼
              ┌────────────────────────────────┐
              │      Selecting (multiple)       │ ─── S1603
              └────────────────┬───────────────┘
                               │
                               ▼
              ┌────────────────────────────────┐
              │   Gamma conversion (multiple)   │ ─── S1604
              └────────────────┬───────────────┘
                               │
                               ▼
              ┌────────────────────────────────┐
              │     Gamma control (multiple)    │ ─── S1605
              └────────────────┬───────────────┘
                               │
                               ▼
        ┌───────────────────────────────────────────┐
        │          Second transmission              │ ─── S1606
        │ (simultaneously transmitting image information) │
        └──────────────────────┬────────────────────┘
                               │
                               ▼
                        ┌─────────────┐
                        │     END     │
                        └─────────────┘
```

Fig.17

EP 2 148 515 A1

Fig.18

Fig.19

(Converter for chromaticity coordinates,
Controller for chromaticity coordinates)

CPU — 1901

Storage apparatus

Program for converting
chromaticity coordinates

Program for controlling
the chromaticity
coordinates

1902

RGBW chromaticity
coordinate value of
imaging apparatus

Correlation table for
imaging apparatus and
RGBW chromaticity
coordinates

Correlation table for
HSB and RGBW
chromaticity coordinates

<Work area>

Program for converting
chromaticity coordinates

Program for controlling
the chromaticity
coordinates

Main
memory

1903

<Data area>

RGBW chromaticity
coordinate value of
display apparatus

Identification information
of display apparatus

RGBW chromaticity
coordinate value of
imaging apparatus

Correlation table for
imaging apparatus and
RGBW chromaticity
coordinates

Correlation table for
HSB and RGBW
chromaticity coordinates

Identification information
of imaging apparatus

Image information
(before RGBW conversion)

Image information
(before conversion)

Image information
(converted)

I/O — 1904

(Storage, Transmitter,
Storage for image information)

1905

EP 2 148 515 A1

Fig20

START

↓

Storing chromaticity coordinate data — S2001

↓

First transmission
(connecting display apparatus) — S2002

↓

Selecting — S2003

↓

Chromaticity coordinates
of selected display apparatus is different
from chromaticity coordinates of
image information? — S2004

NO →

YES ↓

RGBW
chromaticity
coordinates — S2005

NO →

YES ↓

Converting HSB chromaticity coordinates of image
information to RGBW chromaticity coordinates — S2006

↓

Chromaticity coordinate conversion — S2007

↓

Chromaticity coordinate control — S2008

↓

Second transmission
(transmitting image information) — S2009

↓

END

## INTERNATIONAL SEARCH REPORT

| | International application No. |
|---|---|
| | PCT/JP2008/057990 |

A. CLASSIFICATION OF SUBJECT MATTER
*H04N9/64*(2006.01)i, *G09G3/20*(2006.01)i, *G09G5/00*(2006.01)i, *G09G5/02*
(2006.01)i, *G09G5/36*(2006.01)i

According to International Patent Classification (IPC) or to both national classification and IPC

B. FIELDS SEARCHED

Minimum documentation searched (classification system followed by classification symbols)
H04N9/64, G09G3/20, G09G5/00, G09G5/02, G09G5/36

Documentation searched other than minimum documentation to the extent that such documents are included in the fields searched
Jitsuyo Shinan Koho         1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-322566 A (Canon Inc.),<br>04 December, 1998 (04.12.98),<br>Par. Nos. [0031] to [0072]; Figs. 1 to 3, 7<br>(Family: none) | 1,3,4,6,8,<br>10,12,14 |
| Y | | 2,5,7,9,11,<br>13 |
| Y | WO 2005/088984 A1 (Olympus Corp.),<br>22 September, 2005 (22.09.05),<br>Par. Nos. [0068] to [0072]<br>& US 2006/0279647 A1 | 2,5,7,9,11,<br>13 |
| A | JP 2003-6629 A (Toppan Printing Co., Ltd.),<br>10 January, 2003 (10.01.03),<br>Par. No. [0005]<br>(Family: none) | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>14 May, 2008 (14.05.08) | Date of mailing of the international search report<br>27 May, 2008 (27.05.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/057990

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-339056 A (Seiko Epson Corp.), 28 November, 2003 (28.11.03), Par. No. [0067] & US 2003/0234785 A1   & EP 1365600 A2 | 1-14 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4291591 B

**Non-patent literature cited in the description**

- **Iwao Oishi et al.** Display No Kiso. Kyoritsu Shuppan Co.,Ltd, 2001